# EUROPEAN PATENT SPECIFICATION

(11) **EP 3 855 716 B1**
(45) Date of publication and mention of the grant of the patent: **28.06.2023**
(21) Application number: 19879348.1
(22) Date of filing: 30.10.2019
(51) Int. Cl.: H04M 1/72463, H04M 1/67, G06F 21/31, G06F 3/16, G06F 21/32, G10L 17/00, G10L 15/08

(54) **AUDIO CONTROL METHOD AND ELECTRONIC DEVICE**
TONSTEUERUNGSVERFAHREN UND ELEKTRONISCHE VORRICHTUNG
PROCÉDÉ DE COMMANDE AUDIO ET DISPOSITIF ÉLECTRONIQUE

(30) Priority: 31.10.2018 CN 201811291610
(43) Date of publication of application: 28.07.2021
(73) Proprietor: HUAWEI TECHNOLOGIES CO., LTD., Shenzhen, Guangdong 518129 (CN)
(72) Inventor: GAN, Yuanli, Shenzhen, Guangdong 518129 (CN); ZHANG, Long, Shenzhen, Guangdong 518129 (CN); LI, Kan, Shenzhen, Guangdong 518129 (CN); JIE, Jinjin, Shenzhen, Guangdong 518129 (CN); SUN, Danqing, Shenzhen, Guangdong 518129 (CN)
(74) Representative: Gill Jennings & Every LLP
(86) International application number: PCT/CN2019/114175
(87) International publication number: WO 2020/088483

(56) References cited:
- US-A1- 2015 141 079
- US-A1- 2017 110 125

## Description

### TECHNICAL FIELD

This application relates to the field of terminal technologies, and in particular, to an audio control method and an electronic device.

### BACKGROUND

Currently, when a screen of an electronic device (such as a mobile phone or a tablet computer) is locked, if a user needs to perform an operation on the electronic device, the user needs to first unlock the electronic device, enter a home screen, and then perform a corresponding operation.

For example, if the user needs to make a mobile phone payment, in a case of WeChat payment, when the screen of the mobile phone is locked or off, the user needs to first unlock the mobile phone and enter the home screen. Then, the user finds a WeChat icon on the home screen, and taps the WeChat icon, so that the mobile phone displays a WeChat user interface. The user further needs to perform an operation on a corresponding virtual button in the WeChat user interface, to enable the mobile phone to display a QR code interface of WeChat Money, so that the user can make a payment to a merchant.

It can be learned from the foregoing description that, in the foregoing conventional manner, when the user uses a function of the mobile phone, for example, the WeChat payment, two or more operation steps are required. This is relatively cumbersome, and user experience is poor.

US 2015/141079 A1 describes a terminal voice control method. The method includes: when a voice instruction of a user is received, identifying the voice instruction, and extracting wake-up indication information from the voice instruction; performing voice verification on the voice instruction if the wake-up indication information is obtained by extracting; and after the voice verification succeeds, extracting processing indication information from the voice instruction, and responding to the voice instruction of the user according to the processing indication information. According to the terminal voice control method, a user may use one voice instruction to control a terminal to complete multiple tasks without requiring voice interaction for multiple times, the method is simple to use, and has high security performance.

US 2017/110125 A1 describes a method for initiating an operation using voice. The method includes extracting one or more voice features based on first audio data detected in a use stage; determining a similarity between the first audio data and a preset first voice model according to the one or more voice features, wherein the first voice model is associated with second audio data of a user, and the second audio data is associated with one or more preselected voice contents; and executing an operation corresponding to the first voice model based on the similarity.

CN 108062464 A describes a terminal control method and system based on voiceprint recognition. The method includes: receiving speech information sent by a user; acquiring an operation instruction, which corresponds to the speech information, in a pre-established speech information relation library according to the speech information, wherein operation instructions corresponding to all speech information are stored in the speech information relation library; and executing a corresponding operation according to the operation instruction. Through the method, a terminal can be enabled to quickly execute the operation, which corresponds to the speech information, through the pre-set speech information, and thus user experience is improved on the basis of improving use efficiency of the terminal.

### SUMMARY

This application provides an audio control method and an electronic device, to help reduce operation steps performed when a user uses the electronic device, and to improve user experience to some extent.

According to a first aspect, an embodiment of this application provides an audio control method, as set out in claim 1.

In this embodiment of this application, the user may control, through audio, the electronic device to perform an operation. This helps reduce operation steps performed when the user uses the electronic device. In addition, because the electronic device obtains different scores of audio signals through voiceprint recognition, flexible and different operations can be implemented. This helps reduce a possibility that the electronic device rejects a user request due to incorrect determining during audio control, implements controlling of the electronic device through the audio, and increases a user's trust in a controlling function of the electronic device through the audio. In addition, when the score of the audio signal is slightly low, the security authentication needs to be performed on the electronic device. This also helps improve security of the audio control, and therefore improves user experience.

In a possible design, the prompting, by the electronic device, the user to perform security authentication in a manner other than a voice manner includes:
displaying, by the electronic device, a lock screen interface of the electronic device, where the lock screen interface is used to prompt the user to perform security authentication in the manner other than the voice manner. The foregoing manner helps simplify complexity of prompting the user to perform security authentication in the manner other than the voice manner.

In a possible design, the method further includes: when the score of the first audio signal is less than or equal to the second threshold, sending, by the electronic device, first voice prompt information, where the first voice prompt information is used to prompt the user that the recognition of the first audio signal fails; and/or displaying first prompt information in the lock screen interface, where the first prompt information is used to prompt the user that the recognition of the first audio signal fails. According to the foregoing technical solution, the user can learn of a reason why the electronic device skips unlocking the electronic device and skips performing the first operation. This helps improve interaction between the electronic device and the user, and further improves user experience to some extent.

In a possible design, the electronic device may perform voiceprint recognition on the first audio signal in the following manner, to determine the score of the first audio signal:
determining, by the electronic device from at least one pre-configured user keyword voiceprint model, a user keyword voiceprint model corresponding to a keyword included in the first audio signal; and extracting a voiceprint feature of the first audio signal, and matching the extracted voiceprint feature with the determined user keyword voiceprint model corresponding to the keyword of the first audio signal, to determine the score of the first audio signal. The foregoing technical solution helps improve reliability of the score that is of the first audio signal and that is determined by the electronic device.

In a possible design, the electronic device may pre-configure the user keyword voiceprint model in the following manner:
receiving, by the electronic device, a second audio signal of the user, where the second audio signal includes a second voice signal, and the second voice signal is spoken by the user based on a keyword prompted by the electronic device; when identifying that a keyword included in the second audio signal is consistent with the keyword prompted by the electronic device, extracting, by the electronic device, a voiceprint feature of the second audio signal; and configuring, based on the voiceprint feature of the second audio signal and a pre-stored background model, a user keyword voiceprint model corresponding to the keyword prompted by the electronic device. This helps enable the user keyword model configured by the electronic device to represent the feature when the user makes a voice of the keyword. It should be noted that, in this embodiment of this application, when the electronic device configures the user keyword model, the electronic device may prompt, for a same keyword, the user to record voice signals in which the keyword is spoken for a plurality of times, to help improve reliability of the pre-configured user keyword model.

In a possible design, the method further includes: when identifying that the keyword included in the second audio signal is inconsistent with the keyword prompted by the electronic device, prompting, by the electronic device, the user that the keyword is incorrect. This helps improve interaction between the user and the electronic device, and improves user experience.

In a possible design, the voiceprint feature of the first audio signal includes at least one of a mel-frequency cepstral coefficient MFCC, perceptual linear prediction PLP, and linear predictive coding LPC.

In a possible design, the receiving, by an electronic device, a first audio signal includes: receiving, by the electronic device, the first audio signal collected by a headset connected to the electronic device. According to the foregoing technical solution, the first audio signal is slightly affected by environmental noise, so that the electronic device can identify the first audio signal, and control the electronic device.

In a possible design, when the headset is a bone conduction headset, the first audio signal further includes a bone conduction signal, and the bone conduction signal is a voice generated by vibration of an ear bone when the user makes a voice. This helps improve security authentication.

According to a second aspect, an embodiment of this application provides an electronic device. The electronic device includes one or more processors; a memory; a plurality of application programs; and one or more computer programs, where the one or more computer programs are stored in the memory, the one or more computer programs include an instruction, and when the instruction is executed by the electronic device, the electronic device is enabled to perform a method according to the first aspect.

### BRIEF DESCRIPTION OF DRAWINGS

FIG. 1 is a schematic structural diagram of hardware of an electronic device according to an embodiment of this application;
FIG. 2A, FIG. 2B and FIG. 2C are a schematic diagram of an application scenario according to an embodiment of this application;
FIG. 3 is a schematic diagram of a user interface according to an embodiment of this application;
FIG. 4 is a schematic diagram of a user interface of security authentication according to an embodiment of this application;
FIG. 5 is a schematic diagram of an unlocked user interface according to an embodiment of this application;
FIG. 6a is a schematic diagram of another unlocked user interface according to an embodiment of this application;
FIG. 6b is a schematic diagram of another unlocked user interface according to an embodiment of this application;
FIG. 6c is a schematic diagram of another unlocked user interface according to an embodiment of this application;
FIG. 6d is a schematic diagram of another unlocked user interface according to an embodiment of this application;
FIG. 7A, FIG. 7B and FIG. 7C are a schematic diagram of another application scenario according to an embodiment of this application;
FIG. 8a-1 and FIG. 8a-2 are a schematic flowchart of an audio control method according to an embodiment of this application;

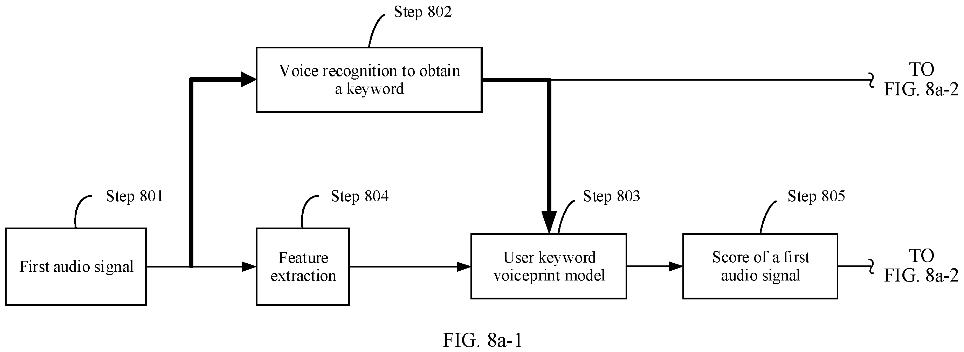

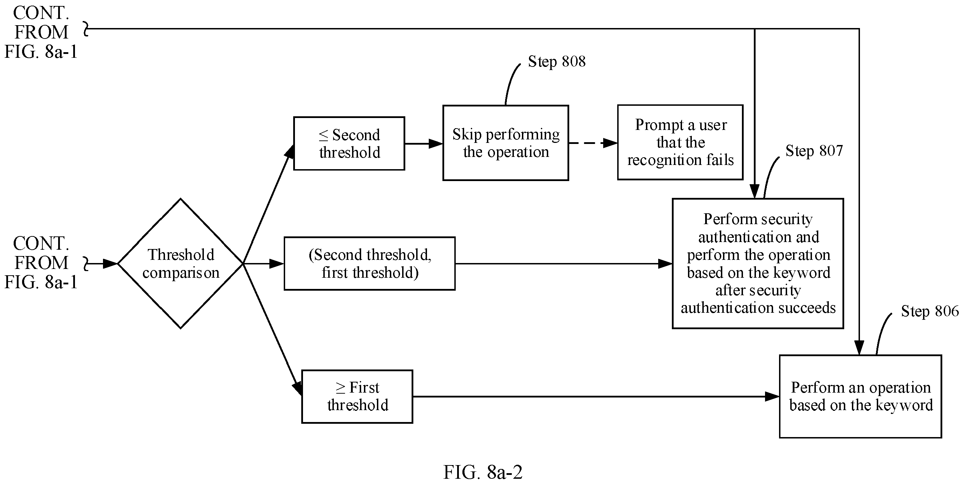

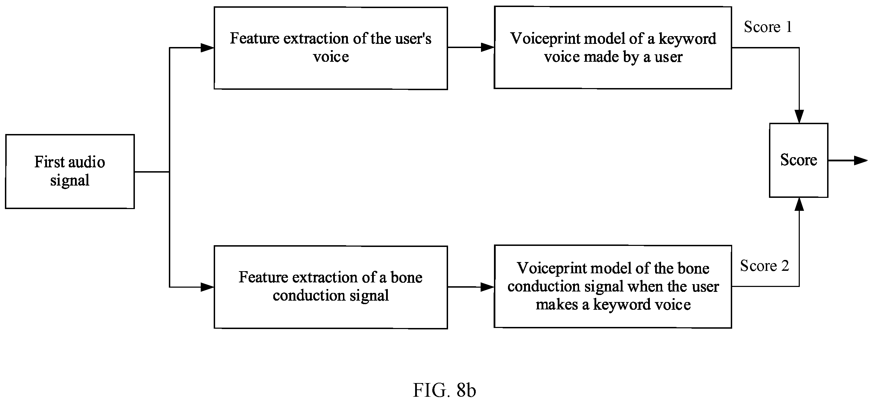

FIG. 8b is a schematic flowchart of a method for obtaining a score of an audio signal according to an embodiment of this application;

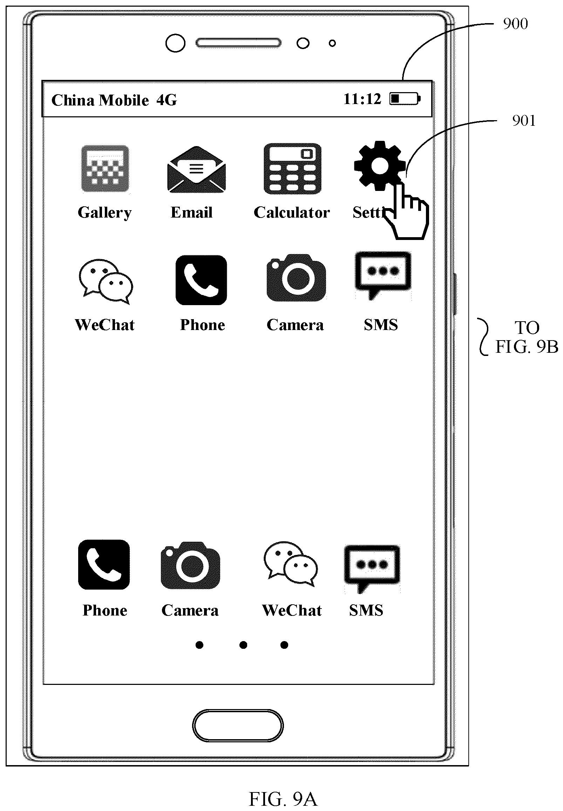

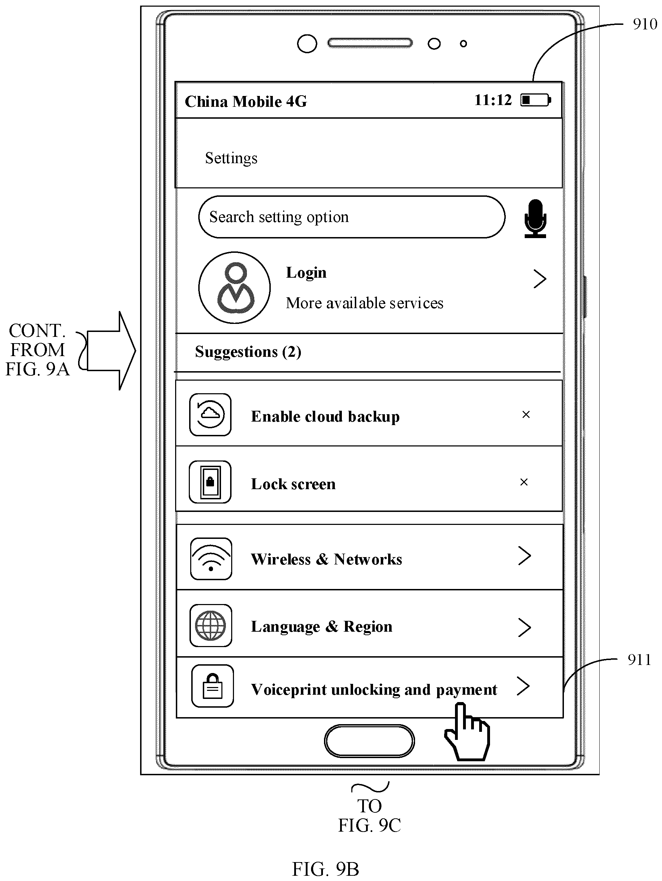

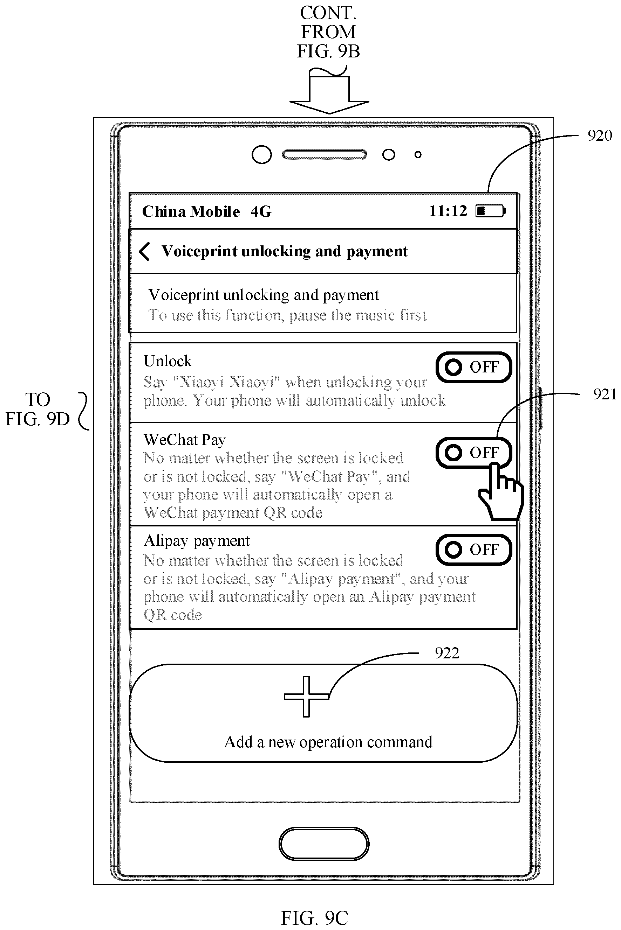

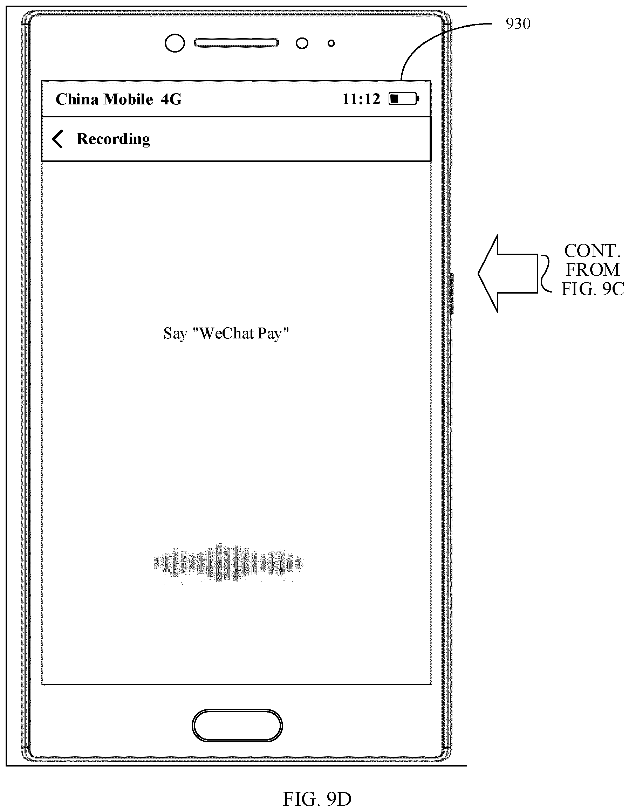

FIG. 9A, FIG. 9B, FIG. 9C, and FIG. 9D are a schematic diagram of a scenario of recording an audio signal according to an embodiment of this application;

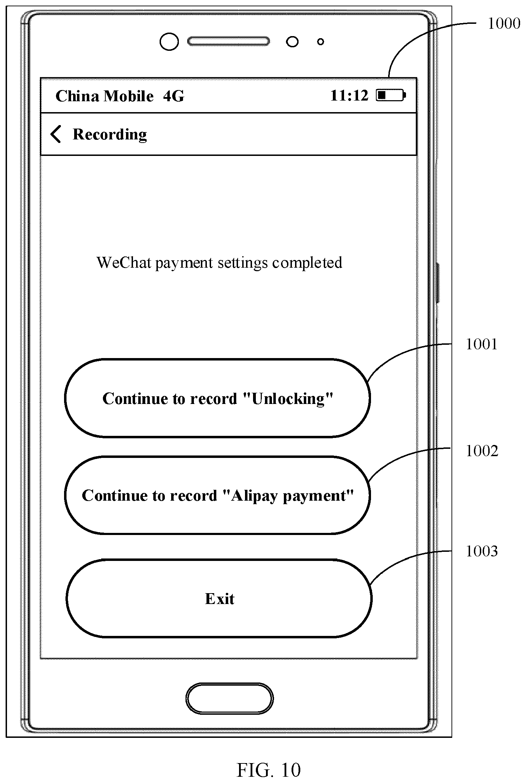

FIG. 10 is a schematic diagram of a user interface according to an embodiment of this application;

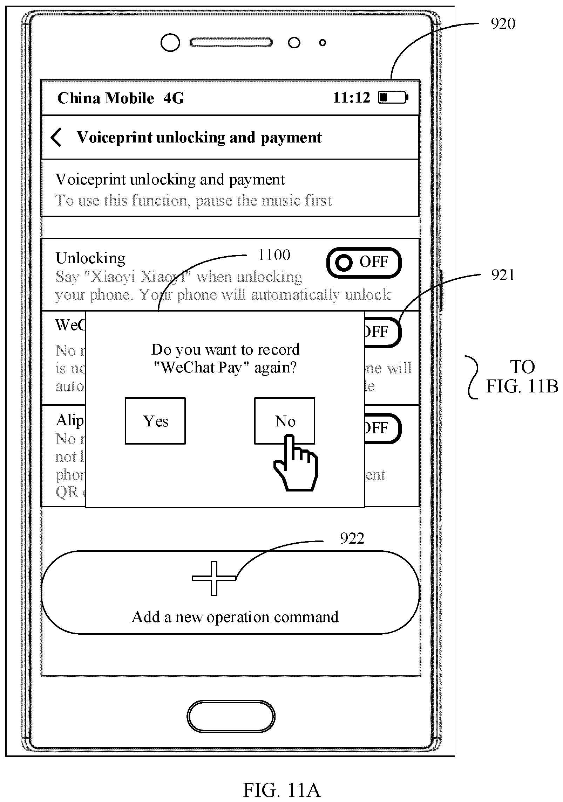

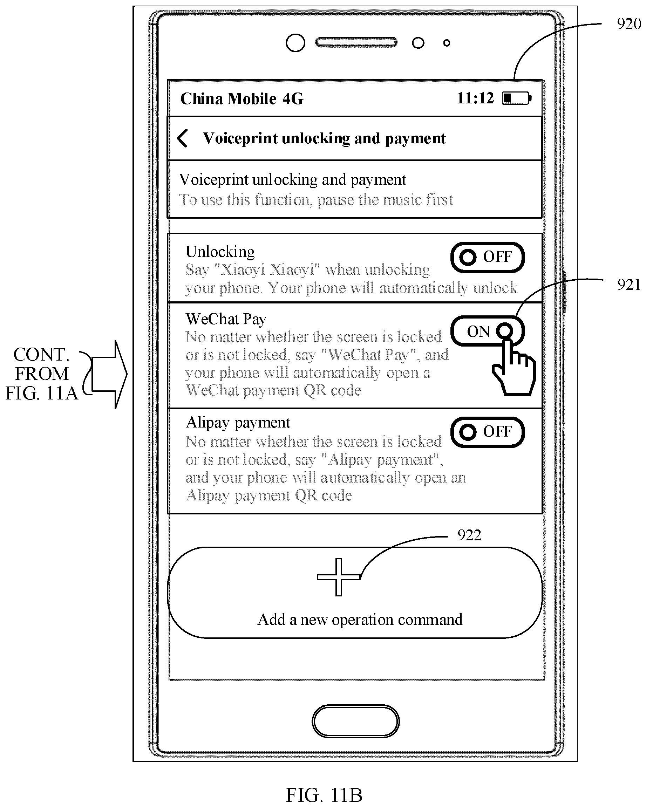

FIG. 11A and FIG. 11B are a schematic diagram of another user interface according to an embodiment of this application;

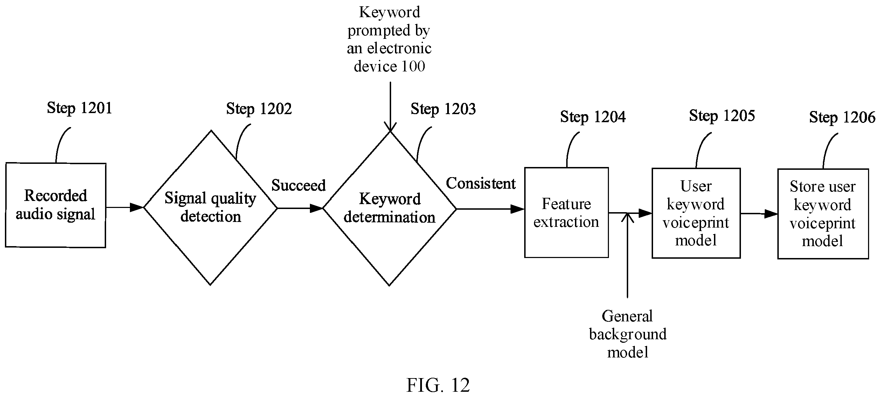

FIG. 12 is a schematic flowchart of a method for pre-configuring a user keyword voiceprint model according to an embodiment of this application;

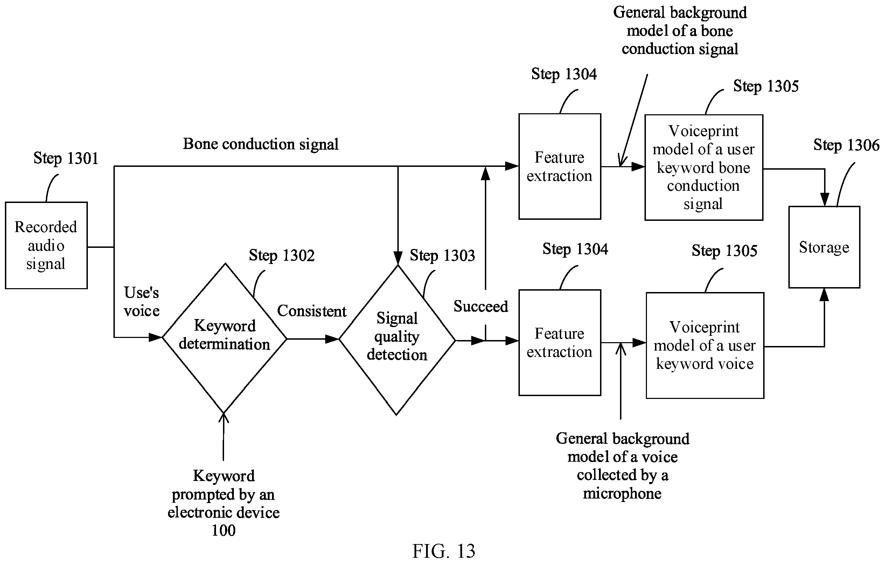

FIG. 13 is a schematic flowchart of another audio control method according to an embodiment of this application; and

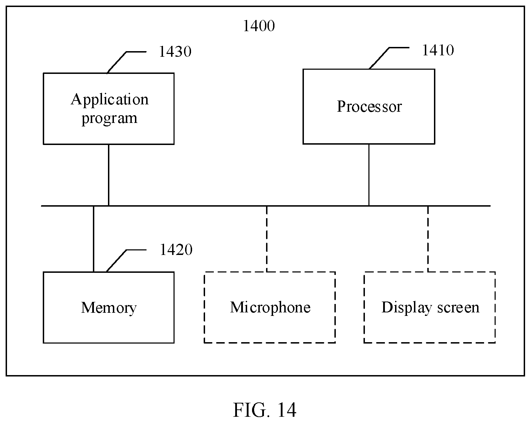

FIG. 14 is a schematic structural diagram of an electronic device according to an embodiment of this application.

### DESCRIPTION OF EMBODIMENTS

It should be understood that the embodiments of this application are applied to an electronic device. For example, the electronic device may be a portable electronic device, such as a mobile phone, a tablet computer, a wearable device (such as a smartwatch) having a wireless communication function, or a vehicle-mounted device. The portable electronic device includes but is not limited to a portable electronic device that carries an IOS^{®}, Android^{®}, Microsoft^{®}, or another operating system. Alternatively, the portable electronic device may be, for example, a laptop (Laptop) having a touch-sensitive surface (for example, a touch panel). It should be further understood that, in some other embodiments of this application, the electronic device 100 may alternatively be a desktop computer having a touch-sensitive surface (for example, a touch panel).

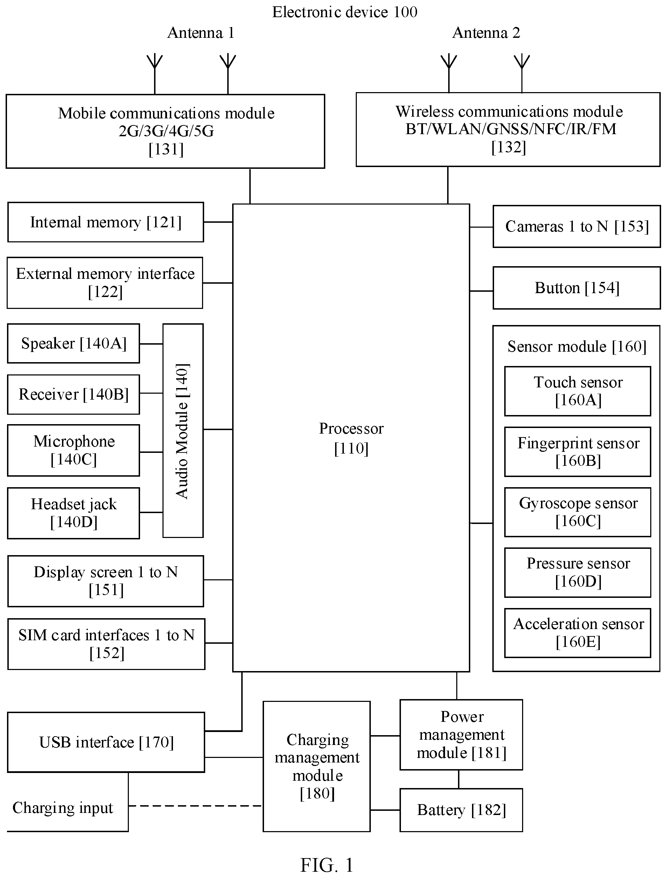

For example, FIG. 1 is a schematic structural diagram of hardware of an electronic device according to an embodiment of this application. Specifically, the electronic device 100 includes a processor 110, an internal memory 121, an external memory interface 122, an antenna 1, a mobile communications module 131, an antenna 2, a wireless communications module 132, an audio module 140, a speaker 140A, a receiver 140B, a microphone 140C, a headset interface 140D, a display screen 151, a subscriber identification module (subscriber identification module, SIM) card interface 152, a camera 153, a button 154, a sensor module 160, a universal serial bus (universal serial bus, USB) interface 170, a charging management module 180, a power management module 181, and a battery 182. In some other embodiments, the electronic device 100 may further include a motor, an indicator, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-processing unit (neural-network processing unit, NPU). Different processing units may be separate devices, or may be integrated into one or more processors.

In some embodiments, a memory may be further disposed in the processor 110, and is configured to store an instruction and data. For example, the memory in the processor 110 may be a cache memory. The memory may be configured to store an instruction or data that is just used or cyclically used by the processor 110. If the processor 110 needs to use the instruction or the data again, the processor 110 may directly invoke the instruction or the data from the memory. This helps avoid repeated access, reduces a waiting time period of the processor 110, and improves system efficiency.

The internal memory 121 may be configured to store computer-executable program code. The executable program code includes an instruction. The processor 110 runs the instruction stored in the internal memory 121, to implement various function applications and data processing of the electronic device 100. The internal memory 121 may include a program storage area and a data storage area. The program storage area may store an operating system, an application required by at least one function (for example, a sound play function and an image play function), and the like. The data storage region may store data (such as audio data and an address book) created during use of the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS).

The external memory interface 122 may be configured to connect to an external storage card (such as a micro SD card) to extend a storage capability of the electronic device 100. The external memory card communicates with the processor 110 through the external memory interface 122, to implement a data storage function, for example, to store files such as music and a video in the external memory card.

The antenna 1 and the antenna 2 are configured to: transmit and receive electromagnetic wave signals. Each antenna in the electronic device 100 may be configured to cover a single communications frequency band or a plurality of communications frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 131 may provide a solution that is for wireless communication including 2G/3G/4G/5G and the like and that is applied to the electronic device 100. The mobile communications module 131 may include at least one filter, a switch, a power amplifier, a low noise amplifier (low noise amplifier, LNA), and the like. The mobile communications module 131 may receive an electromagnetic wave signal through the antenna 1, perform processing such as filtering or amplification on the received electromagnetic wave signal, and transmit the electromagnetic wave signal to the modem processor for demodulation. The mobile communications module 131 may further amplify a signal modulated by the modem processor, and convert the signal to an electromagnetic wave signal through the antenna 1 for radiation. In some embodiments, at least some function modules in the mobile communications module 131 may be disposed in the processor 110. In some embodiments, at least some function modules in the mobile communications module 131 may be disposed in a same device as at least some modules in the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (not limited to the speaker 140A, the receiver 140B, or the like), or displays an image or a video through the display screen 151. In some embodiments, the modem processor may be an independent device. In some other embodiments, the modem processor may be independent of the processor 110, and is disposed in a same device as the mobile communications module 131 or another function module.

The wireless communications module 132 may provide a solution, applied to the electronic device 100, to wireless communication including a wireless local area network (wireless local area networks, WLAN) (for example, a Wi-Fi network), Bluetooth (bluetooth, BT), a global navigational satellite system (global navigation satellite system, GNSS), frequency modulation (frequency modulation, FM), near field communication (near field communication, NFC), an infrared (infrared, IR) technology, or the like. The wireless communications module 132 may be one or more devices integrating at least one communications processing module. The wireless communications module 132 receives an electromagnetic wave signal through the antenna 2, performs frequency modulation and filtering processing on the electromagnetic wave signal, and sends a processed signal to the processor 110. The wireless communications module 132 may further receive a to-be-sent signal from the processor 110, perform frequency modulation and amplification on the signal, and convert a processed signal into an electromagnetic wave signal through the antenna 2 for radiation.

In some embodiments, the antenna 1 and the mobile communications module 131 of the electronic device 100 are coupled, and the antenna 2 and the wireless communications module 132 of the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-code division multiple access (time-division code division multiple access, TD-SCDMA), long term evolution (long term evolution, LTE), BT, the GNSS, the WLAN, the NFC, the FM, the IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement audio functions such as music play and recording through the audio module 140, the speaker 140A, the receiver 140B, the microphone 140C, the headset jack 140D, the application processor, and the like.

The audio module 140 may be configured to convert digital audio information into an analog audio signal for output, and is also configured to convert an analog audio input into a digital audio signal. The audio module 140 may be further configured to perform audio signal encoding and decoding. In some embodiments, the audio module 140 may be disposed in the processor 110, or some function modules in the audio module 140 are disposed in the processor 110.

The speaker 140A, also referred to as a "horn", is configured to: convert an audio electrical signal into a sound signal, and play the signal. For example, the electronic device 100 may play music by using the loudspeaker 140A. For another example, when the electronic device 100 enables hands-free calling, a user's voice received by the mobile communications module 131 or the wireless communications module 132 may be played by using the loudspeaker 140A.

The receiver 140B, also referred to as an "earpiece", is configured to convert an audio electrical signal into a voice. For example, the user may listen to a voice by moving the receiver 140B close to a human ear.

The microphone 140C, also referred to as a "microphone", is configured to convert a collected user's voice into an electrical signal. When making a call or sending a voice, the user may make a voice by using a mouth close to the microphone 140C. The microphone 140C may be configured to collect the user's voice, and then convert the user's voice into an electrical signal. At least one microphone 140C may be disposed in the electronic device 100. In some other embodiments, two microphones 140C may be disposed in the electronic device 100, and in addition to collecting the user's voice, a noise reduction function may be further implemented. In some other embodiments, three, four, or more microphones 140C may be further disposed on the electronic device 100, to implement voice collection and noise reduction, identify a voice source, implement a directional recording function, and the like.

The headset jack 140D is configured to connect to a wired headset. The headset jack 140D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface. In addition, the electronic device 100 may be further connected to the headset in a wireless manner such as Bluetooth. It should be noted that, in this embodiment of this application, the headset connected to the electronic device 100 may be a bone conduction headset, or may be a headset of another type. For example, the headset of the another type may include another vibration sensing sensor (such as an optical sensor or an acceleration sensor) different from the bone conduction sensor. The bone conduction headset may collect the user's voice by using the microphone, and collect a bone conduction signal by using the bone conduction sensor. The bone conduction signal is a voice generated by vibration of an ear bone of the human ear when the user makes a voice. The electronic device 100 may determine, based on the bone conduction signal, that the voice collected by the headset by using the microphone is a voice made by a living body (for example, a person). The electronic device 100 enables, through the bone conduction signal, the electronic device 100 to determine that the collected user's voice is a voice made by the user, instead of a recorded voice made by the user. This helps prevent another person having a purpose from performing an operation on the electronic device 100 by using the recorded user's voice, and reduces a possibility of a misoperation on the electronic device 100.

The electronic device 100 can implement a display function by using the GPU, the display screen 151, the application processor, and the like. The GPU is a microprocessor for image processing, and is connected to the display screen 151 and the application processor. The GPU is configured to perform mathematical and geometric calculation, and is used for graphics rendering. The processor 110 may include one or more GPUs that execute a program instruction to generate or change display information.

The display screen 151 may be configured to display an image, a video, and the like. The display screen 151 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), Miniled, MicroLed, Micro-oLed, a quantum dot light emitting diode (quantum dot light emitting diodes, QLED), or the like. In some embodiments, the electronic device 100 may include one or N display screens 151, where N is a positive integer greater than 1.

The electronic device may implement a photographing function through the ISP, the camera 153, the video codec, the GPU, the display screen 151, the application processor, and the like.

The camera 153 may be configured to capture a static image or a video. Generally, the camera 153 includes a lens and an image sensor. The camera 153 projects an optical image collected by the lens onto the image sensor for imaging. The image sensor may be a charge coupled device (charge coupled device, CCD) or a complementary metal-oxide-semiconductor (complementary metal-oxide-semiconductor, CMOS) photoelectric transistor. The image sensor converts the optical image into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the electronic device 100 may include one or N cameras 153, where N is a positive integer greater than 1.

The ISP may further perform algorithm optimization on noise, luminance, and complexion of the image. The ISP may further optimize parameters such as exposure and a color temperature of a photographing scenario. In some embodiments, the ISP may be disposed in the camera 153.

The button 154 may include a power button, a volume button, and the like. The button 154 may be a mechanical button, or may be a touch button. The electronic device 100 may receive a button input, and generate a key signal input related to a user setting and function control of the electronic device 100.

The sensor module 160 may include one or more sensors, for example, a touch sensor 160A, a fingerprint sensor 160B, a gyroscope sensor 160C, a pressure sensor 160D, and an acceleration sensor 160E.

The touch sensor 160A may also be referred to as a "touch panel". The touch sensor 160A may be disposed in the display screen 151. The touch sensor 160A and the display screen 151 constitute a touchscreen that is also referred to as a "touch control screen". The touch sensor 160A is configured to detect a touch operation performed on or near the touch sensor 160A. The touch sensor 160A may transmit the detected touch operation to the application processor, to determine a type of a touch event. Visual output related to the touch operation may be provided by using the display screen 151. In some other embodiments, the touch sensor 160A may also be disposed on a surface of the electronic device 100 at a position different from a position of the display screen 151.

The fingerprint sensor 160 may be configured to collect a fingerprint. The electronic device 100 may use a feature of the collected fingerprint to implement fingerprint unlocking, accessing an application lock, fingerprint photographing, fingerprint call answering, and the like.

The gyroscope sensor 160C may be configured to determine a moving posture of the electronic device 100. In some embodiments, angular velocities of the electronic device 100 around three axes (to be specific, an x-axis, a y-axis, and a z-axis) may be determined by using the gyroscope sensor 160C. The gyroscope sensor 160C may be used for image stabilization during photographing. For example, when the shutter is pressed, the gyroscope sensor 160C detects an angle at which the electronic device 100 shakes, and calculates, based on the angle, a distance that needs to be compensated for a lens module, so that the lens cancels the shake of the electronic device 100 through reverse motion, to implement image stabilization. The gyroscope sensor 160C may be further used in a navigation scenario and a somatic game scenario.

The pressure sensor 160D is configured to sense a pressure signal, and can convert the pressure signal into an electrical signal. In some embodiments, the pressure sensor 160D may be disposed in the display screen 151. There are many types of pressure sensors 160D, for example, a resistive pressure sensor, an inductive pressure sensor, and a capacitive pressure sensor. The capacitive pressure sensor may include at least two parallel plates that have conductive materials. When a force acts on the pressure sensor 180A, capacitance between electrodes changes. The electronic device 100 determines pressure strength based on the change of the capacitor. When a touch operation acts on the display screen 194, the electronic device 100 detects strength of the touch operation by using the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message icon, an instruction for viewing an SMS message is executed. When a touch operation whose touch operation intensity is greater than or equal to the first pressure threshold is performed on the SMS message icon, an instruction for creating a new SMS message is executed.

The acceleration sensor 160E may detect magnitude of accelerations in various directions (usually on three axes) of the electronic device 100. When the electronic device 100 is static, a magnitude and a direction of gravity may be detected. The acceleration sensor 160E may be further configured to identify a posture of the electronic device, and is applied to applications such as landscape/portrait orientation switching and a pedometer.

In some embodiments, the sensor module 160 may further include an ambient optical sensor, a range sensor, an optical proximity sensor, a bone conduction sensor, a heart rate sensor, and the like. For example, the bone conduction sensor may obtain a vibration signal of a vibration bone of a human vocal-cord part. For another example, the bone conduction sensor may also contact a body pulse to receive a blood pressure beating signal. In some embodiments, the bone conduction sensor may also be disposed in the headset, to obtain a bone conduction headset. The audio module 140 may obtain a speech signal through parsing based on the vibration signal that is of the vibration bone of the vocal-cord part and that is obtained by the bone conduction sensor, to implement a speech function. The application processor may parse heart rate information based on the blood pressure beating signal obtained by the bone conduction sensor, to implement a heart rate detection function.

In some other embodiments, the processor 110 may alternatively include one or more interfaces. For example, the interface may be a SIM card interface 152. For another example, the interface may be a USB interface 170. For still another example, the interface may be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and/or the like. It may be understood that, in this embodiment of this application, the processor 110 may be connected to different modules of the electronic device 100 by using interfaces, so that the electronic device 100 can implement different functions, for example, photographing and processing. It should be noted that a connection manner of an interface in the electronic device 100 is not limited in this embodiment of this application.

The SIM card interface 152 may be configured to connect to a SIM card. The SIM card may be inserted into the SIM card interface 152 or detached from the SIM card interface 152, to implement contact with or separation from the electronic device 100. The electronic device 100 may support one or N SIM card interfaces, where N is a positive integer greater than 1. The SIM card interface 152 may support a nano SIM card, a micro SIM card, a SIM card, and the like. A plurality of cards may be simultaneously inserted into one SIM card interface 152. The plurality of cards may be of a same type, or may be of different types. The SIM card interface 152 may also be compatible with different types of SIM cards. The SIM card interface 152 may also be compatible with an external memory card. The electronic device 100 may interact with a network by using the SIM card, to implement a call function, a data communication function, and the like. In some embodiments, the electronic device 100 may alternatively use an eSIM, namely, an embedded SIM card. The eSIM card may be embedded in the electronic device 100, and cannot be separated from the electronic device 100.

The USB interface 170 is an interface that conforms to USB standard specifications. For example, the USB interface 170 may include a mini USB interface, a micro USB interface, or a USB type C interface. The USB interface 170 may be configured to connect to a charger to charge the electronic device 100, or may be configured to perform data transmission between the electronic device 100 and a peripheral device, or may be configured to connect to a headset to play audio by using the headset. The USB interface 170 may be further configured to connect to another electronic device, for example, an augmented reality (augmented reality, AR) device.

The charging management module 180 is configured to receive a charging input from the charger. The charger may be a wireless charger, or may be a wired charger. In some embodiments of wired charging, the charging management module 180 may receive a charging input from the wired charger through the USB interface 170. In some embodiments of wireless charging, the charging management module 180 may receive wireless charging input by using a wireless charging coil of the electronic device 100. The charging management module 140 supplies power for the electronic device 100 by using the power management module 181 while charging the battery 182.

The power management module 181 is configured to connect to the battery 182, the charging management module 180, and the processor 110. The power management module 181 receives an input of the battery 182 and/or the charging management module 180, and supplies power to the processor 110, the internal memory 121, an external memory, the display screen 151, the camera 153, the mobile communications module 131, the wireless communications module 132, and the like. The power management module 181 may be further configured to monitor parameters such as a battery capacity, a battery cycle count, and a battery health status (electric leakage or impedance). In some other embodiments, the power management module 181 may alternatively be disposed in the processor 110. In some other embodiments, the power management module 181 and the charging management module 180 may alternatively be disposed in a same device.

It should be understood that a hardware structure of the electronic device 100 shown in FIG. 1 is merely an example. The electronic device in this embodiment of this application may have more or fewer components than those shown in FIG. 1, may combine two or more components, or may have different component configurations. Various components shown in FIG. 1 may be implemented in hardware, software, or a combination of hardware and software including one or more signal processing and/or application-specific integrated circuits.

Embodiments of this application provide an audio control method, so that an electronic device can be controlled through audio. Compared with a conventional operation manner, this helps simplify operation steps of a user and improve user experience. The following describes the embodiments of this application in detail by using the electronic device 100 as an example.

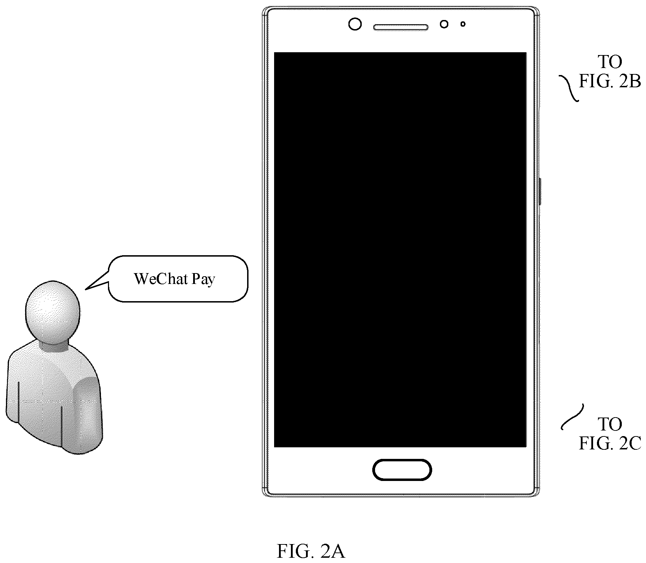

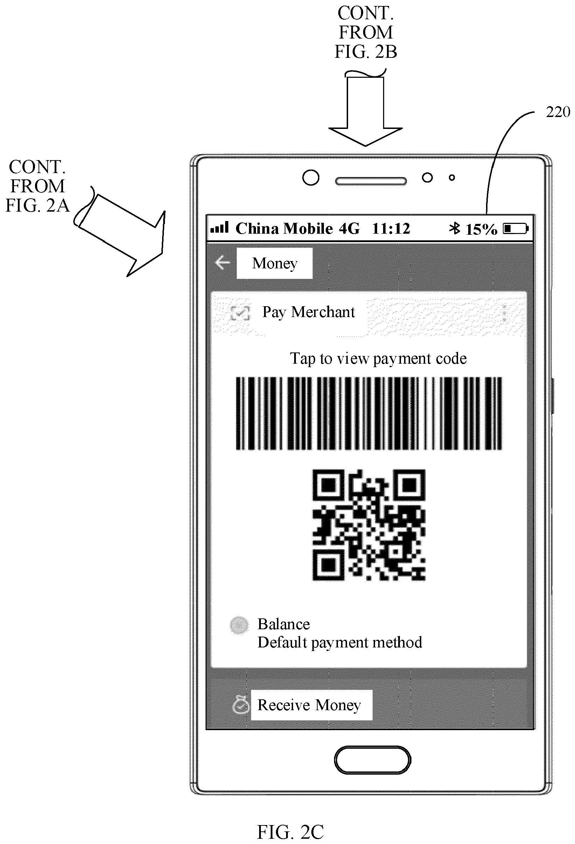

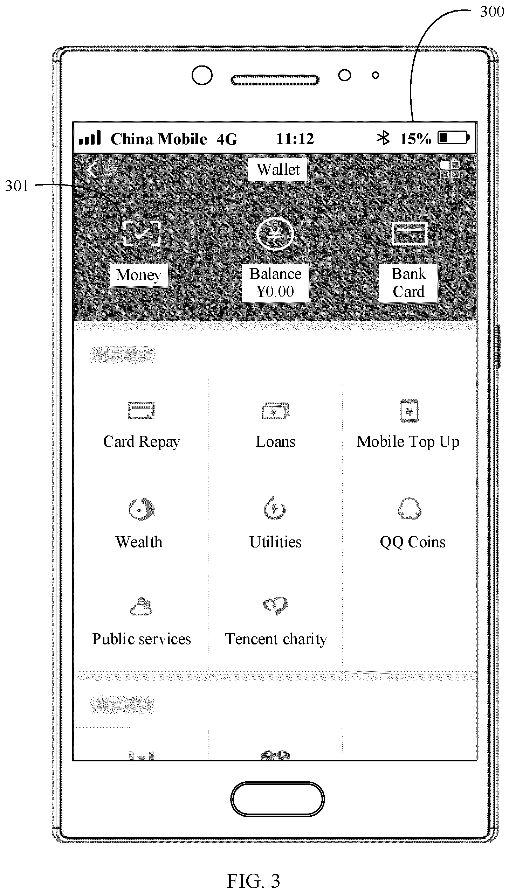

For example, as shown in FIG. 2A, the electronic device 100 obtains a first audio signal when a screen is off. The first audio signal includes a first voice signal of a user, and the first voice signal includes a keyword used to request the electronic device 100 to perform a first operation. It should be noted that in the embodiments of this application, an audio signal may also be referred to as a sound signal, or the like, and a voice signal may also be referred to as a speech signal, or the like. A keyword "WeChat Pay" is used as an example. The electronic device 100 may perform voiceprint recognition on the first audio signal, to determine a score of the obtained first audio signal. For example, the score of the first audio signal is used to represent a possibility that the first audio signal is a voice of "WeChat Pay" made by a preset user. When the score that is of the first audio signal and that is determined by the electronic device 100 is higher, it is determined that the possibility that the first audio signal is the voice of "WeChat Pay" made by the preset user is higher. It should be noted that, in this embodiment of this application, a voiceprint model of a voice of "WeChat Pay" made by a user, for example, an owner, may be preset on the electronic device 100, or a voice of "WeChat Pay" made by a user, for example, an owner, may be preset on the electronic device 100. When the score of the obtained first audio signal is greater than or equal to a first threshold, the electronic device 100 automatically unlocks the electronic device 100 and performs an operation corresponding to "WeChat Pay". It should be noted that the user may preset, on the electronic device 100, an operation performed by the electronic device 100 when a keyword of the audio signal is "WeChat Pay". Alternatively, the electronic device 100 may determine, based on the keyword "WeChat Pay" and a preset algorithm, the operation corresponding to "WeChat Pay". For example, when the keyword of the first audio signal is "WeChat Pay", the operation performed by the electronic device 100 may be displaying a QR code interface of WeChat Money on the display screen 151. For example, the QR code interface of WeChat Money may be a user interface 220 shown in FIG. 2C. For another example, when the keyword of the first audio signal is "WeChat Pay", the operation performed by the electronic device 100 may alternatively be displaying a user interface of a WeChat wallet on the display screen 151. For example, the user interface of the WeChat wallet may be a user interface 300 shown in FIG. 3. For example, the electronic device 100 may display, on the display screen 151, the QR code interface of WeChat Money in response to an operation on a Money button 301. In addition, the electronic device 100 may further perform a corresponding function in response to an operation on another virtual button in the user interface 300.

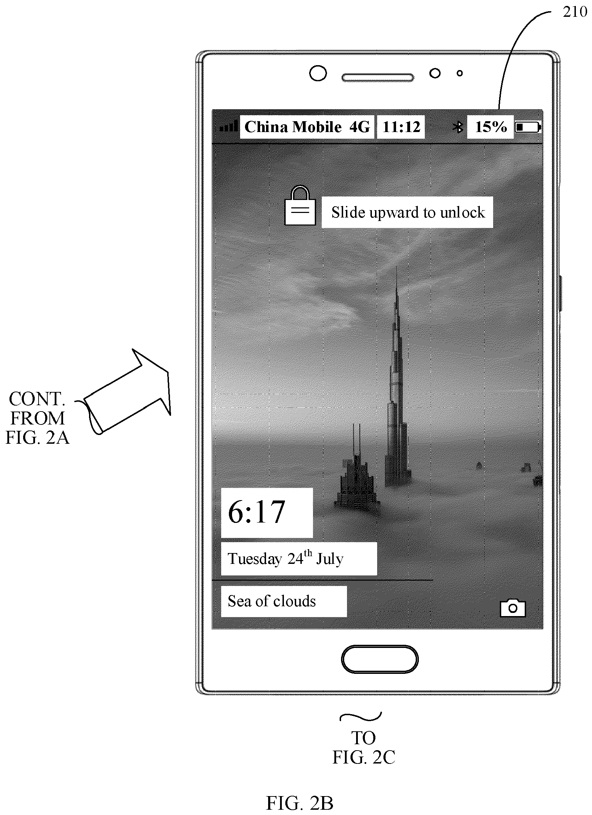

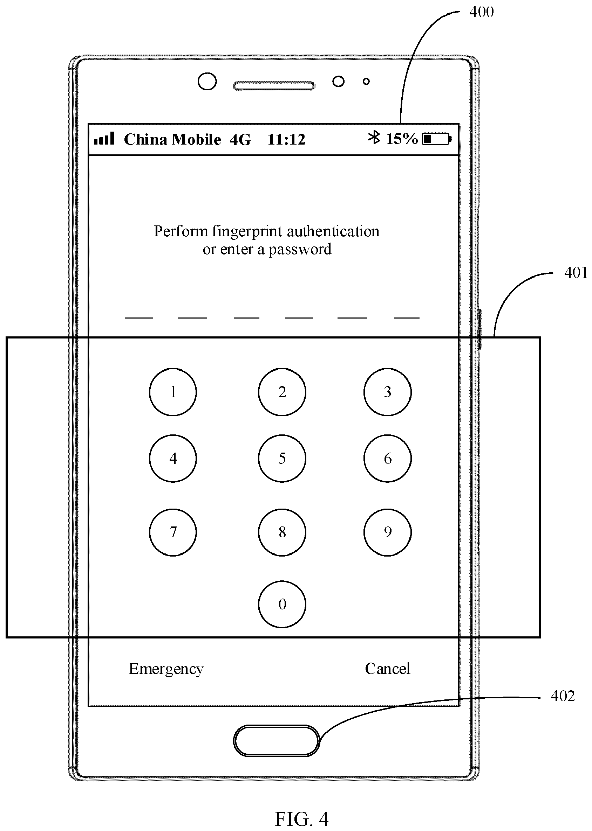

When the obtained score of the first audio signal is less than the first threshold and greater than a second threshold, the electronic device 100 does not unlock the electronic device 100, but prompts the user to perform security authentication. For example, when the obtained score of the first audio signal is less than the first threshold and greater than the second threshold, the electronic device 100 displays a lock screen interface on the display screen 151. The lock screen interface is used to prompt the user to perform security authentication. For example, the lock screen interface may be a user interface 210 shown in FIG. 2B. The electronic device 100 may enter the user interface of the security authentication in response to an operation of sliding upward by the user. For example, the user interface of the security authentication may be a user interface 400 shown in FIG. 4. The user interface 400 includes a virtual numeric keypad 401. The user may enter a lock screen password of the electronic device 100 by using the virtual numeric keypad 401. In addition, the user may also perform fingerprint authentication by using a corresponding finger to touch a home screen button 402. In some other embodiments, the electronic device 100 may further perform security authentication through facial recognition. A security authentication manner is not limited in this embodiment of this application. For another example, when the obtained score of the first audio signal is less than the first threshold and greater than the second threshold, the electronic device 100 displays the user interface of the security authentication on the display screen 151. The user interface of the security authentication is used to prompt the user to perform security authentication. For example, the user interface of the security authentication may be the user interface 400 shown in FIG. 4. It should be understood that, in this embodiment of this application, the user may be prompted, in another manner, to perform security authentication. This is not limited.

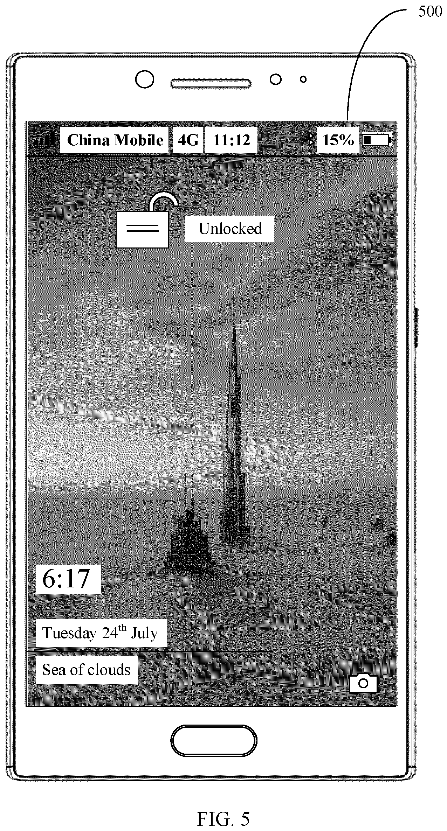

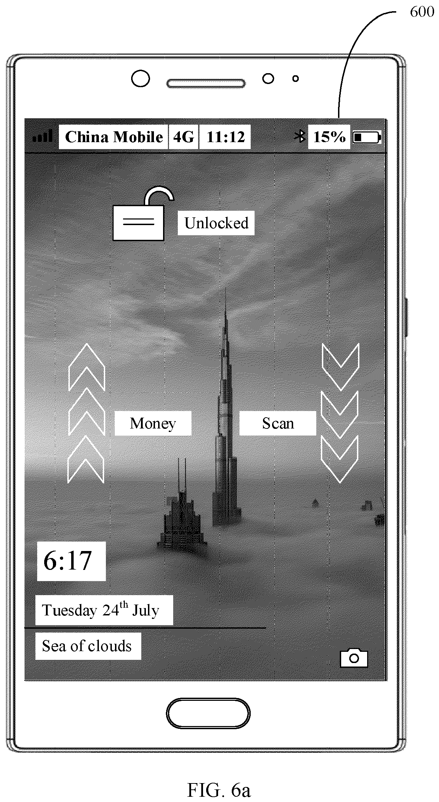

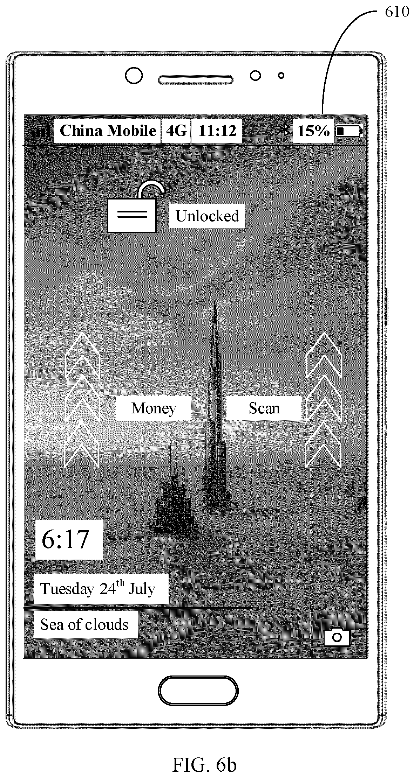

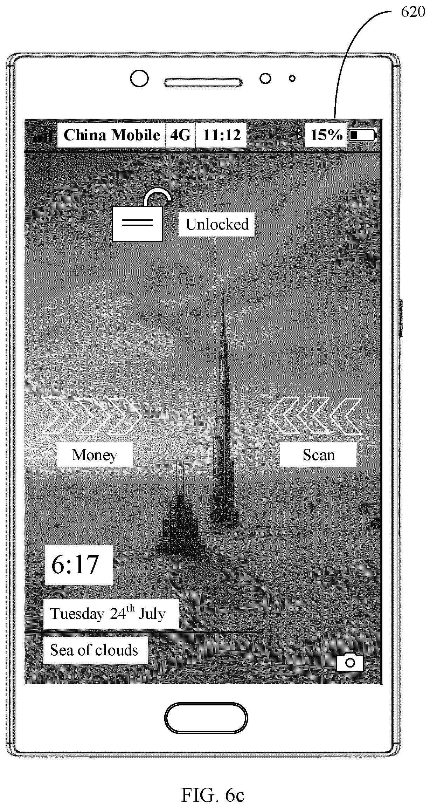

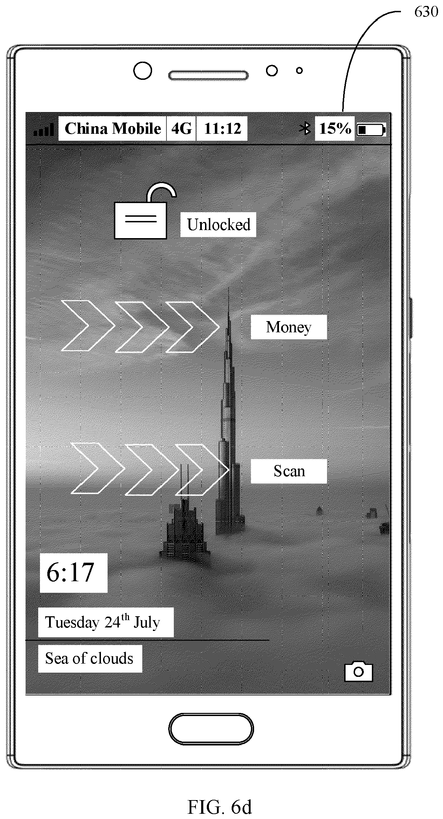

In some embodiments, after the security authentication succeeds, the electronic device 100 may automatically unlock the electronic device 100 and perform the operation corresponding to "WeChat Pay". For example, when the keyword of the first audio signal is "WeChat Pay", the operation performed by the electronic device 100 may be displaying the QR code interface of WeChat Money on the display screen 151. In some other embodiments, after the security authentication succeeds, the electronic device 100 may further automatically unlock the electronic device 100 and display an unlocked interface on the display screen 151. For example, after the electronic device 100 successfully performs security authentication through the face recognition, the electronic device 100 automatically unlocks the electronic device 100, and displays an unlocked interface on the display screen 151. For example, the unlocked interface may be a user interface 500 shown in FIG. 5. The electronic device 100 may perform, in response to a touch operation (for example, a sliding-up operation or a sliding-left operation) performed by the user on the user interface 500, an operation corresponding to "WeChat Pay". For example, the operation corresponding to "WeChat Pay" may be displaying a QR code interface of WeChat Money on the display screen 151. For another example, the unlocked interface may further be a user interface 600 shown in FIG. 6a. The user interface 600 includes a prompt of sliding upward to open a QR code interface of WeChat Money and a prompt of sliding downward to open a WeChat scanning interface. It should be noted that the user may slide upward or downward in any position on the user interface 600, or may slide upward along an upward arrow displayed on the user interface 600, or slide downward along a downward arrow displayed on the user interface 600. A position of the operation of sliding upward/downward by the user is not limited in this embodiment of this application. The electronic device 100 may display, on the display screen 151, the QR code interface of WeChat Money in response to the operation of sliding upward by the user. The electronic device 100 displays, on the display screen 151, the scanning interface in response to the operation of sliding downward by the user. It should be noted that the user interface shown in FIG. 6a is merely used as an example for description in the foregoing embodiment. For example, in this embodiment of this application, when the unlocked user interface includes an operation prompt, the unlocked user interface may alternatively be a user interface 610 shown in FIG. 6b. Sliding upward on a left side of the screen is to open a QR code interface of WeChat Money, and sliding upward on a right side of the screen is to open a WeChat scanning interface, and the like. For another example, in this embodiment of this application, when the unlocked user interface includes an operation prompt, the unlocked user interface may alternatively be a user interface 620 shown in FIG. 6c. Sliding to the right is to open a QR code interface of WeChat Money, and sliding to the left is to open a WeChat scanning interface, and the like. For another example, in this embodiment of this application, when the unlocked user interface includes an operation prompt, the unlocked user interface may alternatively be a user interface 630 shown in FIG. 6d. Sliding to the right in an upper position of the screen is to open a QR code interface of WeChat Money, and sliding to the right in a lower position of the screen is to open a WeChat scanning interface, and the like. It should be further noted that, when the unlocked interface includes a user operation instruction, for example, the user operation instruction is a prompt of sliding upward to open the QR code interface of WeChat Money, the user operation instruction may be preset by the user on the electronic device 100, or may be set before the electronic device 100 is delivered from a factory.

When the obtained score of the first audio signal is less than or equal to the second threshold, the electronic device 100 does not perform automatic unlocking and the operation corresponding to "WeChat Pay". In some embodiments, when the obtained score of the first audio signal is less than or equal to the second threshold, the electronic device 100 may further prompt the user that recognition of the audio signal fails. For example, the electronic device 100 may prompt, in a voice manner, the user that the recognition of the audio signal fails. For example, the electronic device 100 may play first voice prompt information by using the microphone 140C or a microphone of a headset connected to the electronic device 100. The first voice prompt information is used to prompt the user that the recognition of the audio signal fails. For example, the first voice prompt information may be "try again". For another example, when the score of the first audio signal determined by the electronic device 100 is relatively low because of ambient noise, the first voice prompt information may further be "please move to a quiet place and try again". In addition, in this embodiment of this application, when the obtained score of the first audio signal is less than or equal to the second threshold, the electronic device 100 may further display prompt information in the lock screen interface to prompt the user that the recognition of the audio signal fails.

In addition, it should be noted that in this embodiment of this application, the first threshold and the second threshold may be preset on the electronic device 100, and values of the first threshold and the second threshold may be correspondingly set based on an actual requirement. For example, when the score of the audio signal indicates a possibility of a voice made by a preset user, the first threshold may be preset to 0.95, and the second threshold may be preset to 0.85.

The electronic device 100 obtains the first audio signal when a screen is off, and executes the operation corresponding to the keyword of the first audio signal. In addition, the electronic device 100 may further obtain the first audio signal when the display screen 151 displays the lock screen interface. After the electronic device 100 obtains the first audio signal when the lock screen interface is displayed on the display screen 151, for a process in which the electronic device 100 subsequently performs an operation corresponding to the keyword of the first audio signal, refer to a process in which the electronic device 100 subsequently performs the operation corresponding to the keyword of the first audio signal after the electronic device 100 obtains the first audio signal when the screen is off.

It should be noted that the first audio signal may be a user's voice, where the user's voice may be collected by the electronic device 100 by using the microphone 140C of the electronic device 100, or may be a user's voice that is collected by a headset connected to the electronic device 100 and that is sent to the electronic device 100. In some embodiments, the first audio signal includes the user's voice and another signal. For example, when the electronic device 100 is connected to a bone conduction headset, the first audio signal includes the user's voice and a bone conduction signal, where the bone conduction signal is a voice generated by vibration of an ear bone when the user makes a voice. Because the bone conduction signal is the voice generated by vibration of the ear bone when the user makes the voice, the electronic device 100 can identify that the voice is made by a person. In addition, when different people make voices with a same keyword, vibration of the ear bones have different positions, distances, or the like, so that the bone conduction signal is unique. The electronic device 100 performs voiceprint recognition by combining the bone conduction signal with the user's voice, and can further strengthen identification of the user identity, to help improve security. In addition, when the electronic device 100 is a wearable watch, another signal may be a voice generated by a pulse beat. By combining another signal and the user's voice, the electronic device 100 can identify an instruction given by the user, and identify an identity of the user who makes the voice, to help improve security of controlling the electronic device 100 through the audio. It should be further noted that the another signal in this embodiment of this application may alternatively be an optical signal, a temperature, or the like. An expression form of the another signal is not limited in this embodiment of this application.

In this embodiment of this application, because the electronic device 100 can execute the user instruction by obtaining the audio signal, the user can automatically unlock and perform the corresponding operation based on the obtained audio signal when the screen of the electronic device is off or the screen of the electronic device is locked, to help simplify operation steps of the user and improve user experience. In addition, in this embodiment of this application, the first threshold and the second threshold are set, to help reduce a quantity of times that the electronic device 100 rejects a user request sent through the audio, and to improve user experience. For example, when the obtained audio signal is affected by ambient noise or a change of the user's own voice, voiceprint recognition of the audio signal may be affected by the audio signal, and a determined score of the audio signal is slightly lower than the first threshold. If the electronic device 100 directly rejects the user request, a misjudgment may be caused. Therefore, in this embodiment of this application, the second threshold is further set. It should be noted that, in this embodiment of this application, the first threshold and the second threshold may be the same. When the first threshold and the second threshold are the same, and when the obtained score of the audio signal is greater than the first threshold, the electronic device 100 may perform the operation corresponding to the keyword of the audio signal. When the score of the obtained audio signal is less than or equal to the first threshold, the electronic device 100 displays the lock screen interface on the display screen 151. Specifically, for a specific implementation of the lock screen interface, refer to the foregoing related descriptions.

It should be understood that, in this embodiment of this application, different thresholds may be set for audio signals of different keywords, or a same threshold may be set for audio signals of different keywords. In this embodiment of this application, when the different thresholds are preset for the different audio signals of keywords, the electronic device 100 may first identify a keyword in an audio signal, and then search, based on the keyword, for a threshold set for the keyword.

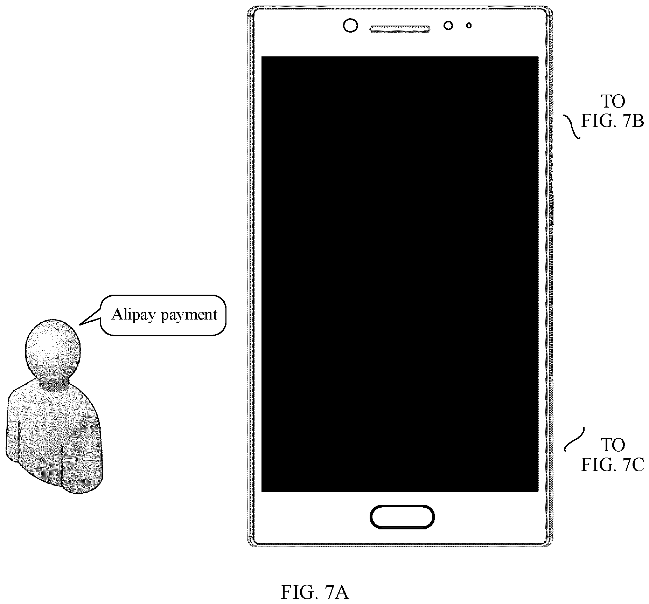

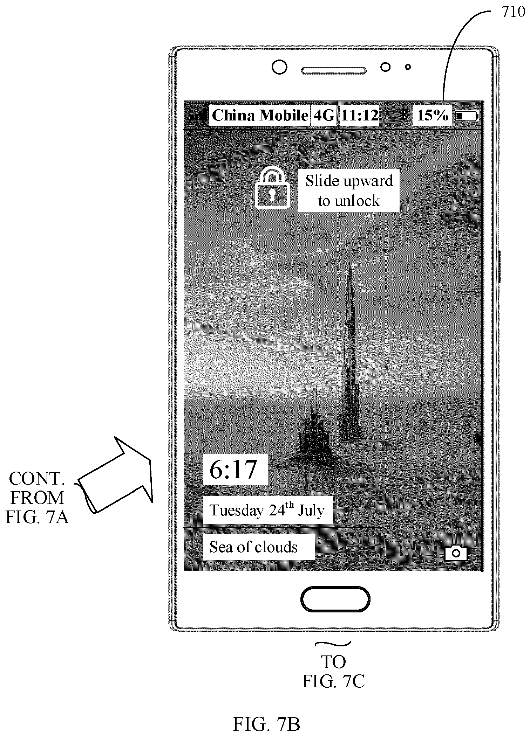

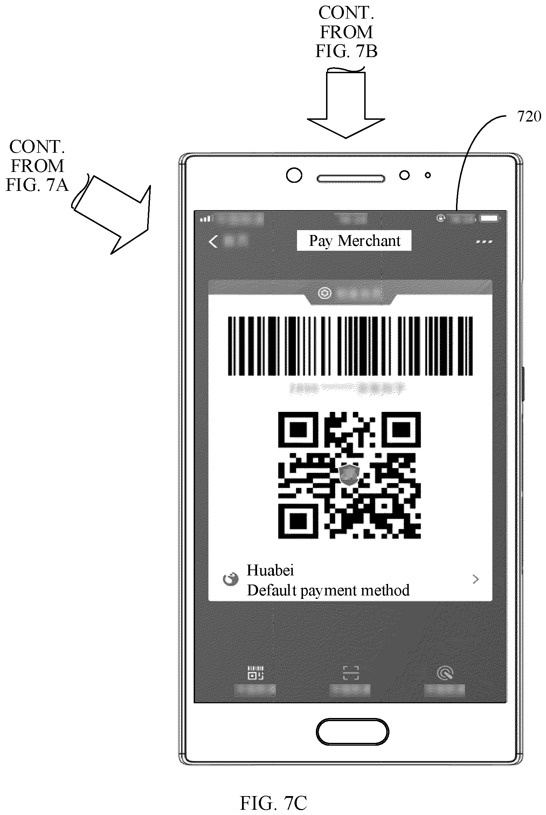

For example, as shown in FIG. 7A, the electronic device 100 obtains a second audio signal when a screen is off or a lock screen interface is displayed. A keyword of the second audio signal is "Alipay payment". The electronic device 100 may perform voiceprint recognition on the second audio signal, to determine an obtained score of the second audio signal. When the score of the obtained second audio signal is greater than or equal to the third threshold, the electronic device 100 automatically unlocks the electronic device 100 and performs an operation corresponding to "Alipay payment". It should be noted that the user may preset, on the electronic device 100, an operation performed by the electronic device 100 when the keyword of the audio signal is "Alipay payment". Alternatively, the electronic device 100 may determine, based on the keyword "Alipay payment" and a preset algorithm, an operation corresponding to "Alipay payment". For example, when the keyword of the second audio signal is "Alipay payment", the operation performed by the electronic device 100 may be displaying a QR code interface of Alipay Pay/Collect on the display screen 151. For example, the QR code interface of Alipay Pay/Collect may be a user interface 720 shown in FIG. 7C. When the obtained score of the second audio signal is less than the third threshold and greater than a fourth threshold, the electronic device 100 displays the lock screen interface on the display screen 151. For example, the lock screen interface may be a user interface 710 shown in FIG. 7B. After security authentication succeeds, the electronic device 100 may automatically unlock the electronic device 100 and perform the operation corresponding to "Alipay payment". In addition, in some embodiments, after the security authentication succeeds, the electronic device 100 may further unlock the electronic device 100 and display an unlocked interface. The electronic device 100 performs the operation corresponding to "Alipay payment" in response to an operation (for example, a sliding-up operation or a touch operation) on the unlocked interface. In some other embodiments, after the security authentication succeeds, the electronic device 100 may further unlock the electronic device 100 and display an unlocked interface. The unlocked interface includes an operation indication related to "Alipay payment", and the operation indication that is related to "Alipay payment" and that is included in the unlocked interface may be preset, and may be determined according to a preset algorithm. The user may perform the operation on the electronic device 100 based on a user requirement and the operation indication related to "Alipay payment". When the obtained score of the second audio signal is less than or equal to the fourth threshold, the electronic device 100 does not automatically unlock the electronic device 100 and does not perform the operation corresponding to "Alipay payment". In some embodiments, when the obtained score of the second audio signal is less than or equal to the fourth threshold, the electronic device 100 may further prompt the user that the recognition of the audio signal fails. For a specific manner of prompting, by the electronic device 100, the user that the recognition of the audio signal fails, refer to a manner of prompting, by the electronic device 100 when the obtained score of the first audio signal is less than or equal to the second threshold, the user that the recognition of the audio signal fails. It should be noted that in this embodiment of this application, the third threshold and the fourth threshold may be preset on the electronic device 100, and values of the third threshold and the fourth threshold may be correspondingly set based on an actual requirement. It should be further noted that the third threshold and the first threshold may be the same or may be different. The fourth threshold and the second threshold may be the same, or may be different.

In addition, it should be noted that, for a manner of obtaining the second audio signal by the electronic device 100, refer to the manner of obtaining the first audio signal by the electronic device 100.

The first audio signal is used as an example. The electronic device 100 may perform voiceprint recognition on the first audio signal in the following manner, to obtain the score of the first audio signal:
determining, by the electronic device 100, a user keyword model corresponding to a keyword of the first audio signal; and extracting a voiceprint feature of the first audio signal, and matching the voiceprint feature of the first audio signal with the determined user keyword model, to obtain the score of the first audio signal. In some embodiments, the electronic device 100 may pre-configure the user keyword model, and then the electronic device 100 determines, from the pre-configured user keyword model, the user keyword model corresponding to the keyword of the first audio signal. In some other embodiments, the user keyword model may alternatively be a background model. For example, the background model may be a universal background model (universal background model, UBM). The UBM is a higher-order Gaussian model trained by using a large quantity of speakers' voices, and includes a large quantity of pieces of speakers' feature information.

It should be noted that in this embodiment of this application, the electronic device 100 may alternatively perform voiceprint recognition on the first audio signal in another manner, to obtain the score of the first audio signal. This is not limited.

FIG. 8a-1 and FIG. 8a-2 is a schematic flowchart of an audio control method according to an embodiment of this application. Specifically, the following steps are included.

Step 801: The electronic device 100 obtains a first audio signal when the electronic device 100 is not unlocked. When the electronic device 100 is not unlocked, the electronic device 100 may be screen-off, or may display a lock screen interface on the display screen 151. Specifically, the first audio signal may be collected by the electronic device 100 by using the microphone 140C of the electronic device 100, or may be collected and reported to the electronic device 100 by a headset or another device connected to the electronic device 100.

Step 802: The electronic device 100 performs voice recognition on the first audio signal, to obtain a keyword of the first audio signal. It should be noted that, when the first audio signal is collected and reported to the electronic device 100 by the headset or the another device connected to the electronic device 100, the headset or the another device connected to the electronic device 100 may perform voice recognition on the first audio signal, and report the keyword of the recognized first audio signal to the electronic device 100. Alternatively, the electronic device 100 may perform voice recognition on the first audio signal to obtain the keyword of the first audio signal. The following uses an example in which the electronic device 100 performs voice recognition for description. For related descriptions of performing voice recognition by the headset or the another device connected to the electronic device 100, refer to related descriptions of performing voice recognition by the electronic device 100.

In some embodiments, the electronic device 100 performs voice recognition on the first audio signal, and when the recognition of the keyword of the first audio signal fails, may play second voice prompt information by using the microphone 140C, a microphone connected to the electronic device 100, or the like. The second voice prompt information may be used to prompt the user that the recognition of the keyword of the first audio signal fails. For example, the second voice prompt information may be "It is not clear. Please try it again". Alternatively, the electronic device 100 may display prompt information in the lock screen interface, to prompt the user that the recognition of the keyword of the first audio signal fails. For example, when the screen is off, the electronic device 100 performs voice recognition on the first audio signal. When the recognition of the keyword of the first audio signal fails, the electronic device 100 lights up the screen, and displays the lock screen interface on the display screen 151. The lock screen interface includes prompt information, and the prompt information is used to prompt the user that the electronic device 100 fails to recognize the keyword.

For example, when recognizing that the keyword of the first audio signal is "WeChat Pay", the electronic device 100 may execute, based on the keyword "WeChat Pay", a service process of invoking a WeChat application installed on the electronic device 100. In some embodiments, when recognizing that the keyword of the first audio signal is "WeChat Pay", if detecting that no WeChat application is installed on the electronic device 100, the electronic device 100 may automatically invoke an application store to download the WeChat application from the application store. In some other embodiments, when the electronic device 100 recognizes that the keyword of the first audio signal is "WeChat Pay", if detecting that no WeChat application is installed on the electronic device 100, the electronic device 100 prompts the user that no WeChat application is installed on the electronic device 100. Specifically, the electronic device 100 may prompt, through a voice, the user that the WeChat application is not installed on the electronic device 100, or may prompt, by displaying prompt information, the user that the WeChat application is not installed.

Step 803: The electronic device 100 determines, based on the keyword of the first audio signal, a user keyword voiceprint model corresponding to the keyword of the first audio signal. In some embodiments, the keyword voiceprint model corresponding to the keyword of the first audio signal may be found based on the keyword of the first audio signal by the electronic device 100 from at least one user keyword voiceprint model pre-configured on the electronic device 100, or may be a general background model or the like.

Step 804: The electronic device 100 performs feature extraction on the first audio signal to obtain a voiceprint feature of the first audio signal.

For example, the voiceprint feature of the first audio signal may include a filter bank feature (filter bank feature), a mel-frequency cepstral coefficient (mel-frequency cepstral coefficient, MFCC), perceptual linear prediction (perceptual linear prediction, PLP), linear predictive coding (linear predictive codes, LPC), or the like, or may include an audio signal bottleneck feature extracted according to a voiceprint deep learning algorithm, or the like.

It should be noted that there is no necessary sequence between the step 804, the step 802, and the step 803, but the step 802, the step 803, and the step 804 are performed before the step 805.

Step 805: The electronic device 100 matches the voiceprint feature of the first audio signal with the user keyword voiceprint model corresponding to the keyword of the first audio signal, to obtain the score of the first audio signal.

For example, when the first audio signal is the user's voice collected by the microphone 151 of the electronic device 100 or the microphone of the headset connected to the electronic device 100, the user keyword voiceprint model corresponding to the keyword of the first audio signal is a voiceprint model in which the user makes a voice of the keyword. For another example, when the first audio signal includes the user's voice and another signal, for example, the another signal is a bone conduction signal collected by the headset connected to the electronic device 100, the user keyword voiceprint model corresponding to the keyword of the first audio signal includes the voiceprint model in which the user makes the voice of the keyword and a voiceprint model of the bone conduction signal obtained when the user makes the voice of the keyword.

That the first audio signal includes the user's voice and the bone conduction signal is used as an example to describe in detail the score of the first audio signal that is obtained by the electronic device 100.

For example, as shown in FIG. 8b, the electronic device 100 performs feature extraction on a user's voice to obtain a voiceprint feature of the user's voice, and then matches the voiceprint feature of the user's voice with a voiceprint model in which the user makes a voice of a keyword, to obtain a score 1. The electronic device 100 performs feature extraction on a bone conduction signal to obtain a voiceprint feature of the bone conduction signal, and then matches the voiceprint feature of the bone conduction signal with a voiceprint model of the bone conduction signal obtained when the user makes the voice of the keyword, to obtain a score 2. The electronic device 100 performs an operation on the score 1 and the score 2 according to a preset algorithm, to obtain the score of the first audio signal. For example, the preset algorithm may be a weighted average value of the score 1 and the score 2, or may be another algorithm. This is not limited.

It should be noted that, in this embodiment of this application, when the first audio signal includes the user's voice and another signal, for a manner of calculating the score of the first audio signal, refer to the manner of calculating the score of the first audio signal when the first audio signal includes the user's voice and the bone conduction signal.

Certainly, in this embodiment of this application, when the first audio signal includes the user's voice and the another signal, the another signal may be one type of signal, or may be a plurality of types of signals. This is not limited.

Step 806: When the score of the first audio signal is greater than or equal to the first threshold, the electronic device 100 automatically unlocks the electronic device 100 and performs an operation corresponding to the keyword of the first audio signal.

Step 807: When the score of the first audio signal is less than the first threshold and greater than the second threshold, the electronic device 100 displays the lock screen interface on the display screen 151, to prompt the user to perform security authentication. After the user security authentication succeeds, the electronic device 100 unlocks the electronic device 100 and performs the operation corresponding to the keyword of the first audio signal.

Step 808: When the score of the first audio signal is less than or equal to the second threshold, the electronic device 100 does not unlock the electronic device 100 and does not perform the operation corresponding to the keyword of the first audio signal. In some embodiments, when the score of the first audio signal is less than or equal to the second threshold, the electronic device 100 further prompts the user that the recolonization of the first audio signal fails.

It should be understood that, for the step 806 to the step 808, refer to the foregoing related descriptions of obtaining the first audio signal by the electronic device 100 when the screen is off. Details are not described herein again.

In this embodiment of this application, the electronic device 100 may pre-configure the user keyword voiceprint model. The keyword "WeChat Pay" is used as an example. The electronic device 100 may pre-configure, based on a pre-recorded audio signal whose keyword is "WeChat Pay", a user keyword voiceprint model corresponding to "WeChat Pay".

For example, the electronic device 100 may record the audio signal of "WeChat Pay" in the following manner:

As shown in FIG. 9A, FIG. 9B, FIG. 9C, and FIG. 9D, the electronic device 100 displays a home screen 900, where the home screen 900 includes a setting icon 901. In some embodiments, the home screen 900 further includes a gallery icon, an email icon, a WeChat icon, and the like. In some other embodiments, the home screen 900 may further include a status bar, a navigation bar that can be hidden, and a dock bar. The status bar may include a name of an operator (for example, China Mobile), a mobile network (for example, 4G), a Bluetooth icon, time, and a remaining battery level. In addition, it may be understood that in some other embodiments, the status bar may further include a Wi-Fi icon, an external device icon, and the like. The navigation bar contains a back button (back button), a home button (home button), and a menu button (menu button). The dock bar may include icons of commonly used applications, such as a phone icon, an information icon, an email icon, and a weather icon. It should be noted that the icons in the dock bar can be set based on user requirements. The electronic device 100 may display a system setting interface 910 on the display screen 151 in response to an operation of a user on the setting icon 901. The system setting interface 910 includes a voiceprint unlocking and payment button 911. In addition, the system setting interface 910 may further include other functional buttons, for example, a cloud backup enabling button and a lock screen button. It should be noted that a name of the voiceprint unlocking and payment button 911 is not limited in this embodiment of this application. The electronic device 100 may display a user interface 920 on the display screen 151 in response to an operation of the user on the voiceprint unlocking and payment button 911. The user interface 920 may include a virtual button used to turn on or turn off voiceprint control unlocking, a virtual button 921 used to turn on or turn off voiceprint control WeChat Pay, and a virtual button used to turn on or turn off voiceprint control Alipay payment. It should be noted that the virtual buttons may be preset before the electronic device 100 is delivered from a factory, or may be set by the user based on a user requirement. For example, as shown in FIG. 9A, FIG. 9B, FIG. 9C, and FIG. 9D, the virtual button 921 is turned off, and the electronic device 100 may perform, in response to that the user turns on the virtual button 921 for the first time, an operation of recording an audio signal of "WeChat Pay".

For example, the user may say "WeChat Pay" to the electronic device 100 based on guidance in the user interface displayed on the electronic device 100, so that the electronic device 100 records the audio signal of "WeChat Pay". For another example, the user may also say "WeChat Pay" to a headset connected to the electronic device 100, so that the electronic device 100 records the audio signal of "WeChat Pay". Generally, the user may say "WeChat Pay" based on a prompt displayed by the electronic device 100 on the display screen 151. For example, when the electronic device 100 needs to continuously record the audio signal of "WeChat Pay" for three times, the electronic device 100 may display, on the display screen 151 after the audio signal of "WeChat Pay" spoken by the user is successfully recorded for the first time, prompt information that requires to speak "WeChat Pay" again. In some embodiments, after obtaining the audio signal, the electronic device 100 performs voice recognition to determine whether a keyword of the obtained audio signal is consistent with the keyword "WeChat Pay" that the electronic device 100 requires the user to speak. If the keywords are consistent, subsequent steps may be performed. If the keywords are inconsistent, the audio signal obtained this time is discarded. In some embodiments, when the electronic device 100 determines that the keyword of the obtained audio signal is inconsistent with the keyword "WeChat Pay" that the electronic device 100 requires the user to say, the electronic device 100 may further prompt the user that the keyword spoken is incorrect. For example, the electronic device 100 may prompt, through a voice, the user that the keyword spoken is incorrect, or may prompt, by displaying prompt information on the display screen 151, the user that the keyword spoken is incorrect. In addition, in this embodiment of this application, the electronic device 100 may further perform signal quality detection after obtaining the audio signal, and perform keyword matching when signal quality of the obtained audio signal is greater than a preset threshold. Certainly, in this embodiment of this application, the electronic device 100 may alternatively perform signal quality detection after keyword matching succeeds. Signal quality detection helps improve reliability of determining the user keyword voiceprint model.

In this embodiment of this application, when the signal quality of the obtained audio signal is less than or equal to the preset threshold, the electronic device 100 gives up the currently obtained audio signal. In some embodiments, when the signal quality of the obtained audio signal is less than or equal to the preset threshold, the electronic device 100 may further prompt the user to move to a quiet place to record the audio signal. Specifically, the electronic device 100 may prompt, by playing a voice by using a microphone or displaying prompt information on the display screen 151, the user to move to the quiet place to record the audio signal. In this embodiment of this application, the user may be further prompted in another manner. This is not limited.

After the electronic device 100 successfully records audio signals of "WeChat Pay" for three consecutive times, the user interface 920 may be displayed. At this point, the virtual button 922 on the user interface 920 is turned on. In some other embodiments, when the electronic device 100 successfully collects the audio signals of "WeChat Pay" for three consecutive times, if audio signals of unlocking and Alipay payment have not been recorded, a user interface 1000 shown in FIG. 10 may be displayed. The user interface 1000 includes a virtual button 1001 for continuing to record "unlocking", a virtual button 1002 for continuing to record "Alipay payment", and an exit button 1003. In some embodiments, when "unlocking" is recorded on the electronic device 100, the virtual button 1001 may not be displayed on the user interface 1000.

When the user does not turn on the virtual button 921 for the first time, the electronic device 100 may directly turn on a "WeChat Pay" function in response to an operation of turning on the virtual button 921 by the user. In some embodiments, when the user does not turn on the virtual button 921 for the first time, in response to the operation of turning on the virtual button 921 by the user, the electronic device 100 may further pop up an audio signal to prompt the user whether to record "WeChat Pay" again. For example, as shown in FIG. 11A and FIG. 11B, when the user does not turn on the virtual button 921 for the first time, the electronic device 100 may pop up a prompt box 1100. The prompt box 1100 includes prompt information, and the prompt information is used to prompt the user whether to record "WeChat Pay" again. The electronic device 100 may directly turn on the virtual button 921 in response to that the user taps a virtual button "No". If the user selects a virtual button "Yes", the electronic device 100 displays a recording interface of "WeChat Pay" on the display screen 151. For example, the recording interface of "WeChat Pay" may be the user interface 930 shown in FIG. 9D.

In some embodiments, if detecting that a login account changes, the electronic device 100 may reset the virtual button on the user interface 920. For example, the user may switch an account by using a login account on a user interface 910 shown in FIG. 9B. For example, when a login account of the electronic device 100 is switched from an account 1 to an account 2, for example, the electronic device 100 records "WeChat Pay" in the account 1, and when the account 1 is switched to the account 2, the electronic device 100 has not recorded "WeChat Pay" in the account 2. When the user turns on the virtual button 921 in the account 2, the electronic device 100 determines that the virtual button 921 is turned on for the first time in the account 2, and performs a process of recording "WeChat Pay" again. It should be noted that switching of the login account of the electronic device 100 may also be unrelated to recording of "WeChat Pay", "unlocking", "Alipay payment", and the like. In this scenario, "WeChat Pay" is used as an example. If the electronic device 100 records "WeChat Pay" when logging in to the account 1, when logging in to the account 2, the electronic device 100 may directly turn on the function of "WeChat Pay" in response to the operation of turning on the virtual button 921.

In some other embodiments, the user interface 920 further includes a virtual button 922 for adding a new operation instruction. This helps the user add the new operation instruction, and further improves user experience. The electronic device 100 may add or delete the new operation instruction in response to an operation on the virtual button 922, for example, bus card payment. When the virtual button used to turn on or turn off the bus card payment is turned on, the user may say "bus card payment", so that the electronic device 100 displays a bus card payment interface.

For example, FIG. 12 is a schematic flowchart of a method for pre-configuring a user keyword voiceprint model according to an embodiment of this application. Specifically, the following steps are included.

Step 1201: An electronic device 100 obtains an audio signal that is recorded based on a keyword prompted by the electronic device 100.

For example, the electronic device 100 may prompt the user with a keyword in a user interface 930 shown in FIG. 9D.

Step 1202: The electronic device 100 performs signal quality detection on the recorded audio signal.

During specific implementation, in this embodiment of this application, the electronic device 100 may perform signal quality detection on the recorded audio signal in the following manner:
The electronic device 100 may compare a signal-to-noise ratio of the recorded audio signal with a preset threshold. For example, when the signal-to-noise ratio of the recorded audio signal is greater than the preset threshold, the signal quality detection succeeds. When the signal-to-noise ratio of the recorded audio signal is less than or equal to the preset threshold, the signal quality detection fails. In some embodiments, when the signal quality detection fails, the audio data recorded this time is given up, and the user is prompted that the audio signal recorded by the user is invalid, and the audio signal is recorded again. For example, the electronic device 100 may prompt, through a voice, the user that the audio signal recorded is invalid, and the audio signal is recorded again. For another example, the electronic device 100 may further prompt, by displaying prompt information on the display screen 151, the user that the audio signal recorded is invalid, and the audio signal is recorded again.

It should be noted that the preset threshold may be set before the electronic device 100 is delivered from a factory, or may be obtained after a large quantity of audio signals recorded by the user are analyzed according to a preset algorithm.

In addition, it should be further noted that the signal quality detection may alternatively be detection based on low noise energy, speech energy, or the like. A parameter used for the signal quality detection is not limited in this embodiment of this application.

Step 1203: After the signal quality detection succeeds, the electronic device 100 determines whether the keyword of the recorded audio signal is consistent with the keyword prompted by the electronic device 100. If the keywords are consistent, a step 1204 is performed. If the keywords are inconsistent, the recorded audio signal is abandoned. In some embodiments, when the keywords are inconsistent, the electronic device 100 further prompts the user that the keyword spoken by the user is invalid. A manner of prompting the user that the keyword is invalid is not limited in this embodiment of this application. The electronic device 100 may identify the keyword from the recorded audio signal through voice recognition.

It should be noted that a sequence of performing signal quality detection and keyword determining by the electronic device 100 is not limited in this embodiment of this application.

Step 1204: The electronic device 100 performs feature extraction on the recorded audio signal, to obtain a voiceprint feature of the recorded audio signal.

Step 1205: The electronic device 100 determines a user keyword voiceprint model based on the voiceprint feature of the recorded audio signal and a background model pre-stored on the electronic device 100.

In this embodiment of this application, the background model is a model and a related parameter that are trained offline by using a large amount of collected keyword data of speakers, and may be a gaussian mixture model (Gaussian Mixture model, GMM) and a first related parameter. For example, the first correlation parameter may include a gaussian mixture distribution parameter, an adaptive adjustment factor, and the like. For example, the background model may also be an UBM-ivector (universal background model-ivector) model and a second related parameter, and the second related parameter may include a gaussian mixture distribution parameter, a total variability space matrix (total variability space matrix), and the like. For another example, the background model may alternatively be a DNN-ivector (deep neural networks-ivector) model and a third related parameter, and the third related parameter may include a DNN-based network structure, a weight, a total variability space matrix, and the like. For another example, the background model may further be an end-to-end model and a parameter such as an x-vectors algorithm based on deep learning, or even a combination of the foregoing plurality of models and parameters such as a combination of the parameters and the GMM and the DNN-ivector. The user keyword voiceprint model is used to indicate that in this case, the audio signal pre-recorded by the user on the electronic device 100 is used to adaptively adapt the general background model and the parameter, to reflect a user feature, and is used to subsequently perform comparison after a user enters the audio signal, to determine whether the user is the same as the user who pre-records the audio signal on the electronic device 100.

Step 1206: The electronic device 100 stores the user keyword voiceprint model. In some embodiments, the electronic device 100 stores the user keyword voiceprint model in a secure zone. For example, the security zone may be a trusted execution environment (trusted execution environment, TEE) of Android.

It may be understood that in this embodiment of this application, different keywords correspond to different user keyword voiceprint models.

When the recorded audio signal includes the user's voice and another signal that are collected by the microphone, the user keyword voiceprint model pre-configured on the electronic device 100 includes a voiceprint model of the user's keyword voice and a voiceprint model of another signal of the user's keyword.

The following provides detailed description by using an example in which the recorded audio signal includes the user's voice and the bone conduction signal that are collected by the microphone.

For example, FIG. 13 is a schematic flowchart of another method for preconfiguring a user keyword voiceprint model according to an embodiment of this application. Specifically, the following steps are included.

Step 1301: An electronic device 100 obtains an audio signal that is recorded based on a keyword prompted by the electronic device 100. The recorded audio signal includes a user's voice and a bone conduction signal that are collected by a microphone.

Step 1302: The electronic device 100 determines whether a keyword of the recorded audio signal is consistent with the keyword prompted by the electronic device 100, and if the keyword of the recorded audio signal is consistent with the keyword prompted by the electronic device 100, performs a step 1303. When the keyword of the recorded audio signal is inconsistent with the keyword prompted by the electronic device 100, the audio signal recorded this time is abandoned. In some embodiments, when the keyword of the recorded audio signal is inconsistent with the keyword prompted by the electronic device 100, the electronic device 100 further prompts the user that the keyword spoken is incorrect. For a specific prompt manner, refer to the foregoing related descriptions.

Step 1303: The electronic device 100 performs signal quality detection. Specifically, the electronic device 100 separately performs signal quality detection on the bone conduction signal and the user's voice. If signal quality detection of either the bone conduction signal or the user's voice fails in a signal quality detection process, the electronic device 100 abandons the currently recorded audio signal, and after both the bone conduction signal and the user's voice succeeds in the signal quality detection, a step 1304 is performed.

Step 1304: The electronic device 100 separately performs feature extraction on the bone conduction signal and the user's voice, to obtain a voiceprint feature of the bone conduction signal and a voiceprint feature of the user's voice.

Step 1305: The electronic device 100 determines a voiceprint model of a user keyword bone conduction signal based on the voiceprint feature of the bone conduction signal and a general background model of a bone conduction signal pre-stored on the electronic device 100, and determines a voiceprint model of a user keyword voice based on the voiceprint feature of the user's voice and a general background model of a voice that is collected by the microphone and that is pre-stored on the electronic device 100.

Step 1306: The electronic device 100 stores the voiceprint model of the user keyword voice and the voiceprint model of the user keyword bone conduction signal.

It may be understood that the method for pre-configuring the user keyword voiceprint model shown in FIG. 13 is a specific implementation of the method for pre-configuring the user keyword voiceprint model shown in FIG. 12. For specific implementation, refer to related descriptions in FIG. 12.

The embodiments in the embodiments of this application may be used separately, or may be used in combination, to achieve different technical effects.

In the embodiments provided in this application, the method provided in the embodiment of this application is described from a perspective in which the electronic device 100 is used as an execution body. To implement functions in the method provided in the embodiments of this application, the terminal may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions.

Based on a same concept, FIG. 14 shows an electronic device 1400 according to this application. The electronic device 1400 includes at least one processor 1410, a memory 1420, a plurality of application programs 1430, and one or more computer programs, where the one or more computer programs are stored in the memory 1420, the one or more computer programs include an instruction, and when the instruction is executed by the processor 1410, the electronic device 1400 is enabled to perform the following steps:
when the electronic device 1400 is not unlocked, receiving a first audio signal, where the first audio signal includes a first voice signal of a user, and the first voice signal includes a keyword for requesting the electronic device to perform a first operation; performing voiceprint recognition on the first audio signal to determine a score of the first audio signal; when the score of the first audio signal is greater than or equal to a first threshold, unlocking the electronic device and performing the first operation; when the score of the first audio signal is less than a first threshold and greater than a second threshold, prompting the user to perform security authentication in a manner other than a voice manner; and after the security authentication performed by the user succeeds, unlocking the electronic device and performing the first operation.

In some embodiments, the user may be prompted, in the following manner, to perform security authentication in the manner other than the voice manner:
displaying a lock screen interface of the electronic device 1400, where the lock screen interface is used to prompt the user to perform security authentication in the manner other than the voice manner. For example, the electronic device 1400 may include a display screen. The lock screen interface of the electronic device 1400 is displayed by using the display screen included in the electronic device 1400, or the lock screen interface of the electronic device 100 may be displayed by using a display device that has a display function and that is connected to the electronic device 100 in a wired or wireless manner.

In some embodiments, the method further includes an instruction used to: when the score of the first audio signal is less than or equal to the second threshold, skip unlocking the electronic device and skip performing the first operation.

In some embodiments, the method includes an instruction used to send first voice prompt information when the score of the first audio signal is less than or equal to the second threshold, where the first voice prompt information is used to prompt the user that recognition of the first audio signal fails, and/or an instruction used to display first prompt information in the lock screen interface when the score of the first audio signal is less than or equal to the second threshold, where the first prompt information is used to prompt the user that recognition of the first audio signal fails.

In some embodiments, voiceprint recognition may be performed on the first audio signal in the following manner, to determine the score of the first audio signal:
determining, from at least one pre-configured user keyword voiceprint model, a user keyword voiceprint model corresponding to a keyword included in the first audio signal; and extracting a voiceprint feature of the first audio signal, and matching the extracted voiceprint feature with the determined user keyword voiceprint model corresponding to the keyword of the first audio signal, to determine the score of the first audio signal.

In some embodiments, the method further includes: an instruction used to receive a second audio signal of the user, where the second audio signal includes a second voice signal, and the second voice signal is spoken by the user based on a keyword prompted by the electronic device; an instruction used to: when identifying that a keyword included in the second audio signal is consistent with a keyword prompted by the electronic device, extract a voiceprint feature of the second audio signal; and an instruction used to configure, based on the voiceprint feature of the second audio signal and a pre-stored background model, a user keyword voiceprint model corresponding to the keyword prompted by the electronic device.

In some embodiments, the method further includes an instruction, used to: when identifying that the keyword included in the second audio signal is inconsistent with the keyword prompted by the electronic device, prompt the user that the keyword is incorrect.

In some embodiments, the voiceprint feature of the first audio signal includes at least one of MFCC, PLP, or LPC.

In some embodiments, the first audio signal may be collected and reported to the electronic device 1400 by a headset connected to the electronic device. Alternatively, the first audio signal may be collected by the electronic device 1400 by using a microphone of the electronic device 1400.

In some other embodiments, when the headset is a bone conduction headset, the first audio signal further includes a bone conduction signal, and the bone conduction signal is a voice generated by vibration of an ear bone when the user makes a voice.

It should be understood that the electronic device 1400 may be configured to implement the audio control method in the embodiments of this application. For related features, refer to the foregoing descriptions. Details are not described herein again.

A person of ordinary skill in the art may clearly know that the embodiments of this application may be implemented through hardware, firmware, or a combination thereof. When the embodiments of this application are implemented by software, the foregoing functions may be stored in a computer-readable medium or transmitted as one or more instructions or code in a computer-readable medium. The computer-readable medium includes a computer storage medium and a communications medium. The communications medium includes any medium that enables a computer program to be transmitted from one place to another. The storage medium may be any available medium accessible by a computer. The computer-readable medium may include, by way of example but not as limitation, a RAM, a ROM, an electrically erasable programmable read only memory (electrically erasable programmable read only memory, EEPROM), a compact disc read-only memory (compact disc read-Only memory, CD-ROM) or another compact disc storage, a magnetic disk storage medium or another magnetic storage device, or any other medium that can be configured to carry or store desired program code in a form of an instruction or a data structure and that can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (digital subscriber line, DSL), or wireless technologies such as infrared, radio, and microwave, the coaxial cable, the optical fiber/cable, the twisted pair, the DSL, or the wireless technologies such as infrared, radio, and microwave are included in a definition of a medium to which the coaxial cable, the optical fiber/cable, the twisted pair, the DSL, or the wireless technologies such as the infrared ray, the radio, and the microwave belong. A disk (disk) and a disc (disc) that are used in the embodiments of this application include a compact disc (compact disc, CD), a laser disc, an optical disc, a digital video disc (digital video disc, DVD), a floppy disk, and a Blu-ray disc. The disk usually magnetically copies data, and the disc optically copies data in a laser manner. The foregoing combination shall also be included in the protection scope of the computer-readable medium.

## Claims

1. An audio control method, wherein the method comprises:
when an electronic device is not unlocked, receiving a first audio signal (801), wherein the first audio signal comprises a first voice signal of a user, and the first voice signal comprises a keyword for requesting the electronic device to perform a first operation;
performing, by the electronic device, voiceprint recognition (802, 803) on the first audio signal, to determine a score (805) of the first audio signal;
when the score of the first audio signal is greater than or equal to a first threshold, unlocking the electronic device and performing the first operation (806);
when the score of the first audio signal is less than a first threshold and greater than a second threshold, prompting the user to perform security authentication (807) in a manner other than a voice manner; and after the security authentication performed by the user succeeds, unlocking, by the electronic device, the electronic device, and performing the first operation; and
when the score of the first audio signal is less than or equal to the second threshold, skipping, by the electronic device, unlocking the electronic device, and skipping performing the first operation (808).

2. The method according to claim 1, wherein the prompting, by the electronic device, the user to perform security authentication in a manner other than a voice manner comprises:
displaying, by the electronic device, a lock screen interface of the electronic device, wherein the lock screen interface is used to prompt the user to perform security authentication in the manner other than the voice manner.

3. The method according to claim 1, wherein when the score of the first audio signal is less than or equal to the second threshold, the method performed by the electronic device further comprises:
sending, by the electronic device, first voice prompt information, wherein the first voice prompt information is used to prompt the user that the recognition of the first audio signal fails; and/or
displaying, by the electronic device, first prompt information in the lock screen interface, wherein the first prompt information is used to prompt the user that the recognition of the first audio signal fails.

4. The method according to any one of claims 1 to 3, wherein the performing, by the electronic device, voiceprint recognition on the first audio signal, to determine a score of the first audio signal comprises:
determining, by the electronic device from at least one pre-configured user keyword voiceprint model, a user keyword voiceprint model (803) corresponding to a keyword comprised in the first audio signal; and
extracting, by the electronic device, a voiceprint feature (804) of the first audio signal, and matching the extracted voiceprint feature with the determined user keyword voiceprint model corresponding to the keyword of the first audio signal, to determine the score of the first audio signal.

5. The method according to claim 4, wherein the method further comprises:
receiving, by the electronic device, a second audio signal of the user, wherein the second audio signal comprises a second voice signal, and the second voice signal is spoken by the user based on a keyword prompted by the electronic device;
when identifying that a keyword comprised in the second audio signal is consistent with the keyword prompted by the electronic device, extracting, by the electronic device, a voiceprint feature of the second audio signal; and
configuring, by the electronic device based on the voiceprint feature of the second audio signal and a pre-stored background model, a user keyword voiceprint model corresponding to the keyword prompted by the electronic device.

6. The method according to claim 5, wherein the method further comprises:
when identifying that the keyword comprised in the second audio signal is inconsistent with the keyword prompted by the electronic device, prompting, by the electronic device, the user that the keyword is incorrect.

7. The method according to any one of claims 4 to 6, wherein the voiceprint feature of the first audio signal comprises at least one of a mel-frequency cepstral coefficient MFCC, perceptual linear prediction PLP, and linear predictive coding LPC.

8. The method according to any one of claims 1 to 7, wherein the receiving, by the electronic device, a first audio signal comprises:
receiving, by the electronic device, the first audio signal collected by a headset connected to the electronic device.

9. The method according to claim 8, wherein when the headset is a bone conduction headset, the first audio signal further comprises a bone conduction signal, and the bone conduction signal is a voice generated by vibration of an ear bone when the user makes a voice.

10. An electronic device, wherein the electronic device comprises one or more processors;
a memory;
a plurality of application programs; and
one or more computer programs, wherein the one or more computer programs are stored in the memory, the one or more computer programs comprise an instruction, and when the instruction is executed by the processor, the electronic device is enabled to perform a method according to any preceding claim.

## Patentansprüche

1. Audiosteuerverfahren, wobei das Verfahren Folgendes umfasst:
wenn eine elektronische Vorrichtung nicht entsperrt ist, Empfangen eines ersten Audiosignals (801), wobei das erste Audiosignal ein erstes Sprachsignal eines Benutzers umfasst und das erste Sprachsignal ein Schlüsselwort zum Auffordern der elektronischen Vorrichtung, eine erste Operation durchzuführen, umfasst,
Durchführen, durch die elektronische Vorrichtung, einer Sprachabdruckerkennung (802, 803) an dem ersten Audiosignal, um eine Punktzahl (805) des ersten Audiosignals zu bestimmen;
wenn die Punktzahl des ersten Audiosignals größer als oder gleich einem ersten Schwellenwert ist, Entsperren der elektronischen Vorrichtung und Durchführen der ersten Operation (806);
wenn die Punktzahl des ersten Audiosignals kleiner als ein erster Schwellenwert und größer als ein zweiter Schwellenwert ist, Rückmelden, dem Benutzer, dass er eine Sicherheitsauthentifizierung (807) auf eine andere Art als eine sprachliche Art durchführen soll; und nachdem die durch den Benutzer durchgeführte Sicherheitsauthentifizierung erfolgreich ist, Entsperren, durch die elektronische Vorrichtung, der elektronischen Vorrichtung, und Durchführen der ersten Operation; und,
wenn die Punktzahl des ersten Audiosignals kleiner als oder gleich dem zweiten Schwellenwert ist, Überspringen, durch die elektronische Vorrichtung, des Entsperrens der elektronischen Vorrichtung, und Überspringen des Durchführens der ersten Operation (808).

2. Verfahren nach Anspruch 1, wobei das Rückmelden, durch die elektronische Vorrichtung, dem Benutzer, dass er eine Sicherheitsauthentifizierung auf eine andere Art als eine sprachliche Art durchführen soll, Folgendes umfasst:
Anzeigen, durch die elektronische Vorrichtung, einer Sperrbildschirmschnittstelle der elektronischen Vorrichtung, wobei die Sperrbildschirmschnittstelle verwendet wird,
um dem Benutzer rückzumelden, dass er eine Sicherheitsauthentifizierung auf die andere Art als die sprachliche Art durchführen soll.

3. Verfahren nach Anspruch 1, wobei, wenn die Punktzahl des ersten Audiosignals kleiner als oder gleich dem zweiten Schwellenwert ist, das durch die elektronische Vorrichtung durchgeführte Verfahren ferner Folgendes umfasst:
Senden, durch die elektronische Vorrichtung, erster Sprachrückmeldungsinformationen, wobei die ersten Sprachrückmeldungsinformationen verwendet werden, um dem Benutzer rückzumelden, dass die Erkennung des ersten Audiosignals fehlschlägt; und/oder Anzeigen, durch die elektronische Vorrichtung, erster Rückmeldungsinformationen in der Sperrbildschirmschnittstelle, wobei die ersten Rückmeldungsinformationen verwendet werden, um dem Benutzer rückzumelden, dass die Erkennung des ersten Audiosignals fehlschlägt.

4. Verfahren nach einem der Ansprüche 1 bis 3, wobei das Durchführen, durch die elektronische Vorrichtung, der Sprachabdruckerkennung an dem ersten Audiosignal, um eine Punktzahl des ersten Audiosignals zu bestimmen, Folgendes umfasst:
Bestimmen, durch die elektronische Vorrichtung aus mindestens einem vorkonfigurierten Benutzerschlüsselwort-Sprachabdruckmodell, eines Benutzerschlüsselwort-Sprachabdruckmodells (803), das einem in dem ersten Audiosignal enthaltenen Schlüsselwort entspricht; und
Extrahieren, durch die elektronische Vorrichtung, eines Sprachabdruckmerkmals (804) des ersten Audiosignals, und Abstimmen des extrahierten Sprachabdruckmerkmals mit dem bestimmten Benutzerschlüsselwort-Sprachabdruckmodell, das dem Schlüsselwort des ersten Audiosignals entspricht, um die Punktzahl des ersten Audiosignals zu bestimmen.

5. Verfahren nach Anspruch 4, wobei das Verfahren ferner Folgendes umfasst:
Empfangen, durch die elektronische Vorrichtung, eines zweiten Audiosignals des Benutzers, wobei das zweite Audiosignal ein zweites Sprachsignal umfasst, und das zweite Sprachsignal durch den Benutzer basierend auf einem Schlüsselwort gesprochen wird, das durch die elektronische Vorrichtung rückgemeldet wird;
bei Identifizieren, dass ein in dem zweiten Audiosignal enthaltenes Schlüsselwort mit dem durch die elektronische Vorrichtung rückgemeldeten Schlüsselwort konsistent ist, Extrahieren, durch die elektronische Vorrichtung, eines Sprachabdruckmerkmals des zweiten Audiosignals; und
Konfigurieren, durch die elektronische Vorrichtung basierend auf dem Sprachabdruckmerkmal des zweiten Audiosignals und einem vorgespeicherten Hintergrundmodell, eines Benutzerschlüsselwort-Sprachabdruckmodells, das dem durch die elektronische Vorrichtung rückgemeldeten Schlüsselwort entspricht.

6. Verfahren nach Anspruch 5, wobei das Verfahren ferner Folgendes umfasst:
bei Identifizieren, dass das in dem zweiten Audiosignal enthaltene Schlüsselwort nicht mit dem durch die elektronische Vorrichtung rückgemeldeten Schlüsselwort konsistent ist, Rückmelden, durch die elektronische Vorrichtung, dem Benutzer, dass das Schlüsselwort nicht korrekt ist.

7. Verfahren nach einem der Ansprüche 4 bis 6, wobei das Sprachabdruckmerkmal des ersten Audiosignals mindestens eines eines Mel-Frequenz-Cepstrum-Koeffizienten MFCC, einer perzeptuellen linearen Prädiktion PLP und einer linearen prädiktiven Codierung LPC umfasst.

8. Verfahren nach einem der Ansprüche 1 bis 7, wobei das Empfangen, durch die elektronische Vorrichtung, eines ersten Audiosignals Folgendes umfasst:
Empfangen, durch die elektronische Vorrichtung, des ersten Audiosignals, das durch eine mit der elektronischen Vorrichtung verbundene Sprechgarnitur erfasst wird.

9. Verfahren nach Anspruch 8, wobei, wenn die Sprechgarnitur eine Knochenleitungssprechgarnitur ist, das erste Audiosignal ferner ein Knochenleitungssignal umfasst, und das Knochenleitungssignal ein Sprachlaut ist, der durch Vibration eines Gehörknöchelchens generiert wird, wenn der Benutzer einen Sprachlaut erzeugt.

10. Elektronische Vorrichtung, wobei die elektronische Vorrichtung umfasst: einen oder mehrere Prozessoren;
einen Speicher;
eine Mehrzahl von Anwendungsprogrammen; und
ein oder mehrere Computerprogramme, wobei das eine oder die mehreren Computerprogramme in dem Speicher gespeichert sind, wobei das eine oder die mehreren Computerprogramme eine Anweisung umfassen, und, wenn die Anweisung durch den Prozessor ausgeführt wird, der elektronischen Vorrichtung ermöglicht wird, ein Verfahren nach einem der vorhergehenden Ansprüche durchzuführen.

## Revendications

1. Procédé de commande audio, le procédé comprenant :
quand un dispositif électronique n'est pas déverrouillé, la réception d'un premier signal audio (801), dans lequel le premier signal audio comprend un premier signal vocal d'un utilisateur, et le premier signal vocal comprend un mot-clé pour demander au dispositif électronique de réaliser une première opération ;
la réalisation, par le dispositif électronique, d'une reconnaissance d'empreinte vocale (802, 803) sur le premier signal audio, pour déterminer un score (805) du premier signal audio ;
quand le score du premier signal audio est supérieur ou égal à un premier seuil, le déverrouillage du dispositif électronique et la réalisation de la première opération (806) ;
quand le score du premier signal audio est inférieur à un premier seuil et supérieur à un second seuil, la demande à l'utilisateur de réaliser une authentification de sécurité (807) d'une manière autre que vocale ; et après le succès de l'authentification de sécurité réalisée par l'utilisateur, le déverrouillage, par le dispositif électronique, du dispositif électronique, et la réalisation de la première opération ; et
quand le score du premier signal audio est inférieur ou égal au second seuil, le saut, par le dispositif électronique, du déverrouillage du dispositif électronique et le saut de la première opération (808).

2. Procédé selon la revendication 1, dans lequel la demande, par le dispositif électronique, à l'utilisateur de réaliser une authentification de sécurité d'une manière autre que vocale comprend :
l'affichage, par le dispositif électronique, d'une interface d'écran de verrouillage du dispositif électronique, l'interface d'écran de verrouillage étant utilisée pour demander à l'utilisateur de réaliser une authentification de sécurité d'une manière autre que vocale.

3. Procédé selon la revendication 1, le procédé réalisé par le dispositif électronique comprenant en outre, quand le score du premier signal audio est inférieur ou égal au second seuil :
l'envoi, par le dispositif électronique, de premières informations de demande vocales, les premières informations de demande vocales étant utilisées pour informer l'utilisateur que la reconnaissance du premier signal audio échoue ; et/ou
l'affichage, par le dispositif électronique, de premières informations de demande dans l'interface d'écran de verrouillage, les premières informations de demande étant utilisées pour informer l'utilisateur que la reconnaissance du premier signal audio échoue.

4. Procédé selon l'une quelconque des revendications 1 à 3, dans lequel la réalisation, par le dispositif électronique, d'une reconnaissance d'empreinte vocale sur le premier signal audio, pour déterminer un score du premier signal audio comprend :
la détermination, par le dispositif électronique à partir d'au moins un modèle d'empreinte vocale de mot-clé utilisateur préconfiguré, d'un modèle d'empreinte vocale de mot-clé utilisateur (803) correspondant à un mot-clé compris dans le premier signal audio ; et
l'extraction, par le dispositif électronique, d'une caractéristique d'empreinte vocale (804) du premier signal audio, et la comparaison de la caractéristique d'empreinte vocale extraite au modèle d'empreinte vocale de mot-clé utilisateur déterminé correspondant au mot-clé du premier signal audio, afin de déterminer le score du premier signal audio.

5. Procédé selon la revendication 4, le procédé comprenant en outre :
la réception, par le dispositif électronique, d'un second signal audio de l'utilisateur, dans lequel le second signal audio comprend un second signal vocal, et le second signal vocal est énoncé par l'utilisateur sur la base d'un mot-clé demandé par le dispositif électronique ;
quand il est identifié qu'un mot-clé compris dans le second signal audio est cohérent avec le mot-clé demandé par le dispositif électronique, l'extraction, par le dispositif électronique, d'une caractéristique d'empreinte vocale du second signal audio ; et
la configuration, par le dispositif électronique en fonction de la caractéristique d'empreinte vocale du second signal audio et d'un modèle d'arrière-plan préstocké, d'un modèle d'empreinte vocale de mot-clé utilisateur correspondant au mot-clé demandé par le dispositif électronique.

6. Procédé selon la revendication 5, le procédé comprenant en outre :
quand il est identifié que le mot-clé compris dans le second signal audio est incohérent avec le mot-clé demandé par le dispositif électronique, l'avis, par le dispositif électronique, que le mot-clé est incorrect.

7. Procédé selon l'une quelconque des revendications 4 à 6, dans lequel la caractéristique d'empreinte vocale du premier signal audio comprend au moins un d'un coefficient cepstral de fréquence mel MFCC, d'une prédiction linéaire perceptuelle PLP, et d'un codage prédictif linéaire LPC.

8. Procédé selon l'une quelconque des revendications 1 à 7, dans lequel la réception, par le dispositif électronique, d'un premier signal audio comprend :
la réception, par le dispositif électronique, du premier signal audio recueilli par un casque connecté au dispositif électronique.

9. Procédé selon la revendication 8, dans lequel quand le casque est un casque à conduction osseuse, le premier signal audio comprend en outre un signal de conduction osseuse, et le signal de conduction osseuse est une voix générée par la vibration d'un os de l'oreille lorsque l'utilisateur parle.

10. Dispositif électronique, le dispositif électronique comprenant un ou plusieurs processeurs ;
une mémoire ;
une pluralité de programmes d'application ; et
un ou plusieurs programmes d'ordinateur, les un ou plusieurs programmes d'ordinateur étant stockés dans la mémoire, les un ou plusieurs programmes d'ordinateur comprenant une instruction, et à l'exécution de l'instruction par le processeur, le dispositif électronique est en mesure de réaliser un procédé selon l'une quelconque des revendications précédentes.
